# EUROPÄISCHE PATENTSCHRIFT

(11) **EP 3 795 766 B1**
(45) Veröffentlichungstag und Bekanntmachung des Hinweises auf die Patenterteilung: **23.10.2024**
(21) Anmeldenummer: 19198960.7
(22) Anmeldetag: 23.09.2019
(51) Int. Cl.: E04B 5/48, H02G 3/18, E04B 5/32, E04B 7/20, H02G 3/38, E04C 5/07, E04C 2/04, E04C 2/52

(54) **AUFNAHMESTRUKTUR UND TEXTILBEWEHRTES BAUELEMENT**
RECEIVING STRUCTURE AND TEXTILE REINFORCED COMPONENT
STRUCTURE DE RÉCEPTION ET COMPOSANT ARMÉ DE TEXTILE

(43) Veröffentlichungstag der Anmeldung: 24.03.2021
(73) Patentinhaber: Garibaldi, Maria Patricia, 09337 Hohenstein-Ernstthal (DE)
(72) Erfinder: CURBACH, Manfred, 01187 Dresden (DE); SCHLÜTER, Dominik, 01127 Dresden (DE); GARIBALDI, Maria Patricia, 09337 Hohenstein-Ernstthal (DE); VAKALIUK, Iurii, 01067 Dresden (DE)
(74) Vertreter: Gottfried, Hans-Peter

(56) Entgegenhaltungen:
- WO-A1-2018/130726
- JP-A- 2002 371 660

## Beschreibung

Die Erfindung betrifft eine Aufnahmestruktur, die zum Einguss in ein Matrixmaterial, insbesondere Beton, eines Bauelements vorgesehen ist und zumindest ein Aufnahmeelement aufweist, das aus der Aufnahmestruktur in der Weise auskragt, dass es in das Matrixmaterial wenigstens teilweise hineinragt. Die Erfindung betrifft auch ein Bauelement, umfassend eine textile Bewehrung, eine insbesondere mineralisches Matrixmaterial und Leitungen, insbesondere für die Durchleitung von Elektrizität oder einem Fluid. Neben der Durchleitung kann die Leitung auch im Sinne eines Funktionselements weitere Funktionen übernehmen, wie z. B. als eine textile Bewehrung mit integrierter Sensortechnik dienen, oder die Bewehrung ist als ein textiles Heizelement ausgeführt.

Ein Großteil der Bauelemente umfassenden Bauwerke bzw. Gebäude dient primär dem Schutz vor Witterung. Die individuelle Nutzung der Bauwerke beispielsweise zum Wohnen, Arbeiten oder Ausstellen kann jedoch über den reinen Witterungsschutz hinaus mit weiteren Aufgaben wie dem Einhüllen oder dem Ver- und Entsorgen der Bewohner bzw. Nutzer verknüpft sein. Die Aufgabe des Einhüllens, welche primär zur Schaffung eines künstlichen, für die jeweiligen Zwecke geeigneten Mikroklimas dient, lässt sich in viele, zumeist bauphysikalische Anforderungen, wie beispielsweise Windschutz, Schutz vor Niederschlag, thermische Konditionierung, Kontrolle des Dampfhaushalts, Schallschutz, natürliche Belichtung oder Brand-, Sicht-, Blend- und Sonnenschutz, aufgliedern. Darüber hinaus besteht die Aufgabe der Ver- und Entsorgung des Gebäudes bzw. der Bewohner mit Medien wie Wasser, Wärmeenergie oder Elektrizität.

Soll ein Gebäude diese Aufgaben, das Tragen, Einhüllen und Versorgen, erfüllen, so sind für dessen Planung und Umsetzung fachspezifische Kompetenzen notwendig. Die Errichtung neuer Gebäude erfordert somit eine Interaktion unterschiedlicher Fachbereiche und Disziplinen. Die Koordinierung dieser unterschiedlichen Bereiche führt zu einem hohen Zeit- und Kostenaufwand sowie einer hohen Fehleranfälligkeit und Unsicherheit bei der Planung. Eine Zusammenführung der verschiedenartigen Technologien bereits im Fertigteilwerk ist nach dem Stand der Technik nicht möglich.

Für die Installation von Daten- und Energieleitungen werden in der Regel getrennte und nachträglich installierte Kabel, meist auf Kupferbasis, verwendet. Eine Doppelnutzung im Sinne der Statik sowie der Digitalisierung der bereits Verwendung findenden und zumeist elektrisch leitfähigen Bewehrung, ganz gleich ob Stahl- oder Textilarmierung mit beispielsweise Carbonrovings, findet nicht statt. Die Stahlbewehrung eignet sich zudem nur sehr begrenzt als direkter ungeschirmter Datenleiter in einem Betonverbund. Dafür müsste entweder eine zusätzliche, als Strom- und Datenleiter ausgeführte Carbongarnstruktur hinzugefügt werden oder eine kombinierte Mischstruktur geschaffen werden. Carbongarn besteht ebenso wie ein Carbonroving aus einer Vielzahl von Carbonfasern, den Einzelfilamenten.

Konventionell werden Gebäude in der Ortbetonbauweise hergestellt. Dies bedeutet, dass die Bauelemente an Ort und Stelle hergestellt werden. Dazu wird der Beton an seiner Einbaustelle in eine Schalung eingebracht und nach dem Erhärten ausgeschalt. Ist der Rohbau fertiggestellt, betreten Fachinstallateure für die Heizungs-, Sanitär- und Elektroinstallation bzw. zur Installation unterschiedlicher erneuerbaren Energietechnologien die Baustelle, um das Gebäude mit weiteren Funktionen zu versehen.

Neben der Ortbetonbauweise existiert die sogenannte Fertigteilbauweise. Bei dieser Bauweise werden Fertigteile im Werk hergestellt, zur Baustelle transportiert und auf der Baustelle zu einem Gebäude zusammengefügt. Dies führt oftmals zu einer Reduktion der Bauzeit, zu einer Witterungsunabhängigkeit und somit einer größeren Planungssicherheit sowie zu geringeren Kosten aufgrund des hohen Grades an industrieller Vorfertigung. Weiterhin haben Bauherren in diesem Fall einen einzigen Ansprechpartner, welcher sich um die Koordinierung kümmert und oftmals auch die Service- und Instandhaltungsarbeiten übernimmt. Eine hohe Präzision und Qualität sind weitere Vorteile der Fertigteilbauweise gegenüber der Ortbetonbauweise. Nach momentanem Stand der Technik haben die im Werk hergestellten Fertigteile jedoch lediglich eine statische oder raumtrennende Funktion. Auch hier betreten erst nach der Fertigstellung des Rohbaus die einzelnen Fachinstallateure die Baustelle um die einzelnen Technologien in-situ, also auf der Baustelle, zu installieren.

Neben dieser konventionellen Trennung existieren verschiedene Ansätze, Funktionskomponenten bereits im Fertigteilwerk in ein Matrixmaterial, insbesondere die Betonmatrix, zu integrieren. Bei sogenannten Sandwichwänden werden Dämmelemente bereits im Fertigteilwerk integriert. Somit entsteht ein funktionalisiertes Fertigteil, mit der Aufgabe der Wärmeisolation. Darüber hinaus können bereits Photovoltaikmodule im Prozess der Fertigteilherstellung integriert werden. Die so erhaltenen Elemente werden als Gebäudeintegrierte Photovoltaik (GiPV), häufig auch BiPV (von englisch Building-integrated Photovoltaic) bezeichnet.

Es ist auch bekannt, sogenannte Phase Change Materials, auch PCM oder Phasenwechselmaterialien, in Bauelemente zu integrieren. Dafür werden Latentwärmespeicher in metallische Kapseln gefüllt und diese in die Betonmatrix eingemischt. Eine Austauschbarkeit sowie eine Lagesicherung der Kapseln innerhalb der Matrix sind auf diese Weise nicht möglich.

Außerhalb dieser Anwendungen sind bisher keine marktüblichen Bauelemente mit integrierten elektrischen Komponenten oder intelligenten Werkstoffen bekannt. Unter intelligenten Werkstoffen (engl. auch Smart Materials oder Responsive Materials) werden im engeren Sinne Materialien verstanden, die speziell entwickelt wurden, um in bestimmter Weise selbstständig auf sich verändernde Umgebungsbedingungen zu reagieren (z. B. Temperaturerhöhungen, mechanische Belastung, pH-Wert). Im weiteren Sinne gehören alle Werkstoffe dazu, deren Eigenschaften durch aktive Steuerung (z. B. über eine elektrische Spannung) auf eine Weise beeinflusst werden können, wie es mit gewöhnlichen Materialien nicht möglich ist.

Somit werden weiterführende Aufgaben des Gebäudes erst durch die nachträgliche Installation von Technologien durch separate Gewerke vor Ort am oder im Bauwerk realisiert. Die Vorteilhaftigkeit einer Fertigteilproduktion bleibt auf diese Weise für einen Großteil der Gebäudetechnologien ungenutzt.

Einige der vorgenannten Probleme werden bereits durch den Stand der Technik gelöst. So beschreibt die Druckschrift DE 10 2005 055 770 A1 ein Bauelement mit einer von einer alkalischen, aushärtenden Matrix, insbesondere einer Betonmatrix oder andere alkalisch aushärtende Aufnahmestrukturen, zumindest teilweise durchdrungenen Bewehrung aus einem Abstandstextil, insbesondere einem Abstandsgewirke z. B. aus AR-Glasfasern. Es ist vorgesehen, dass das Abstandstextil in mindestens einer der beiden Deckflächen Zonen aufweist, in die keine Abstandsfäden eingebunden sind. Zudem sind abstandsfadenfreie Zonen innerhalb des Abstandsgewirkes vorgesehen, in denen sich Versorgungsleitungen bzw. Leerrohre für solche anordnen lassen. Derartige Versorgungsleitungen können z. B. elektrische Kabel oder Rohre für Fußbodenheizungen sein. Als Matrix bzw. Matrixmaterial kommt vorzugsweise Beton zum Einsatz.

Aus der Druckschrift DE 10 2018 122 613 A1 ist eine Vorrichtung zur Daten- und/oder Energieübertragung über wenigstens eine elektrische Leitung bekannt, die im Inneren eines ein Matrixmaterial umfassenden Bauelements angeordnet ist. Es wird vorgeschlagen, dass die elektrische Leitung zumindest aus elektrisch leitfähigen textilen Garnen, Fasern oder Rovings besteht, im Inneren des Bauelements angeordnet ist und mit dem mineralischen oder organischen Matrixmaterial fest vergossen ist. Es ist vorgesehen, dass der Carbonleiter als Bewehrung für ein Bauelement, umfassend das Matrixmaterial, dient. Aus dem Bauelement nach außen reichende und von außerhalb des Bauelements zugängliche elektrische Kontakte sind zugänglich und mit dem Carbonleiter verbunden.

Eine ähnliche Lösung offenbart die Druckschrift DE 10 2017 111 838 A1 durch eine Faserverbundstruktur mit mehreren Faserverbundschichten, wobei jede Faserverbundschicht Fasern und Matrix aufweist. Die Faserverbundstruktur weist eine erste und eine zweite elektrisch leitende Faserverbundschicht und eine elektrisch separierende Faserverbundschicht, die zwischen der ersten und zweiten elektrisch leitenden Faserverbundschicht angeordnet ist, auf. Die erste und die zweite elektrisch leitende Faserverbundschicht und die elektrisch separierende Faserverbundschicht weisen einen Elektrolyten auf. Die Fasern wenigstens einer ersten und zweiten elektrisch leitenden Faserverbundschicht weisen Kohlenstofffasern auf und/oder die Fasern der elektrisch separierenden Faserverbundschicht weisen Glasfasern auf.

Ein weiteres Bauelement aus dem Stand der Technik, ein photovoltaisches (PV) Baukasten-System zur Erzeugung von Solarstrom an Bauwerken, beschreibt die Druckschrift WO 2018/130726 A1. Das vorgeschlagene System umfasst mindestens ein Bauelement, beispielsweise ein Betonfertigteilelement aus Textilbeton, und mindestens ein daran befestigtes PV-Element, das über mindestens eine elektrische Leiterbahn am Bauelement elektrisch kontaktierbar ist. Das PV-Element ist auf einer Oberfläche des Bauelements befestigt, in dessen Oberfläche eingelassen oder demontierbar am Bauelement befestigt. Die Leiterbahn ist währenddessen geschützt gegen Witterungseinflüsse vollständig in das Bauelement integriert oder zumindest teilweise auf einer Oberfläche des Bauelements aufgebracht. Die elektrische Kontaktierung des PV-Elements am Bauelement stellt zugleich eine Befestigung des PV-Elements am Bauelement dar. Es ist auch vorgesehen, dass eine statische Bewehrung des Betonfertigteilelements zugleich als elektrische Leiterbahn zur Kontaktierung mit dem PV-Element dient, wobei die Bewehrung eine Textilfaserbewehrung, vorzugsweise mit Carbonfasern, zusätzlich eine elektrische Leiterbahn zur Kontaktierung des PV-Elements bietet. Allerdings müssen die Photovoltaikeinzelzellen vor dem Betonieren jeweils individuell und vorzugsweise auf eine Textilfasermatte appliziert werden, die die erforderlichen Leiterbahnen zur Verschaltung der Photovoltaikelemente zu einem Modul aufweist. Die Betonbauelemente sind so ausgestaltet, dass sie vorzugsweise über eine einzige elektrische Schnittstelle (d. h. eine Steckverbindung als Anschluss) betrieben werden können. Auf ihrer Rückseite kann das Bauelement über Anker oder als Montageteile ausgeführte Ankerpunkte verfügen.

Aus der Druckschrift JP 2002 371660 A offenbart (vgl. Zusammenfassung; Abbildungen) eine Aufnahmestruktur (7), die zum Einguss in ein Matrixmaterial, insbesondere Beton, eines Bauelements (1) vorgesehen ist und zumindest ein Aufnahmeelement (7) aufweist, das aus der Aufnahmestruktur (7) in der Weise auskragt, dass es in das Matrixmaterial wenigstens teilweise hineinragt. Dieses Aufnahmeelement (7) ist jedoch eine brandgeschützte Leitungsdurchführung, mit deren Hilfe eine Leitung aus dem Bauteil herausgeführt werden kann. Das Aufnahmeelement (7) weist einen Aufnahmeraum auf, in den die Leitung aus dem Matrixmaterial eintritt und der zur Oberfläche des Bauelements (1) hin eine Öffnung aufweist, welche von außerhalb zugänglich ist und durch die wenigstens einen Deckel (8) verschließbar ist. Ein Lagesicherungselement (K) zur Lagesicherung gegenüber einer Bewehrung (S2) gegenüber der Aufnahmestruktur (7) ist vorgesehen. Die Aufnahmestruktur (7) gibt im Wesentlichen die äußere Form der Oberfläche (1) des Bauelements (1) an der Stelle vor, wo sich die Aufnahmestruktur (7) befindet.

Die Integration verschiedener Funktionskomponenten, wie elektronische Komponenten oder intelligente Werkstoffe, in Fertigteile ist nach dem Stand der Technik nur sehr eingeschränkt möglich. Es existieren keine Lösungen, welche eine standardisierte Zusammenführung unterartiger Gebäudefunktionalitäten (Tragen, Einhüllen, Versorgen) in Fertigteile ermöglichen. Hauptgrund dafür ist, dass die zur Verfügung stehenden Technologien, wie beispielsweise elektrische oder thermische Energiespeicher, an sich nicht für eine Integration in Bauelemente geeignet sind. Bauelemente haben hohe Anforderungen unter anderem an Sicherheit, Dauerhaftigkeit und Brandbeständigkeit. Werden Funktionskomponenten, insbesondere elektronische Bauteile oder Materialien, in Bauelemente integriert, so müssten diese ebenfalls den Anforderungen an Bauelemente genügen. Konventionelle Technologien erfüllen diese Anforderungen nicht und sind aus diesem Grund nur bedingt in Bauelemente zu integrieren.

Weiterhin sind die zu integrierenden Komponenten nicht ausreichend robust, um den Witterungsbedingungen und dem oftmals alkalischen Milieu der umgebenden Matrix, z. B. einer Betonmatrix, zu widerstehen. Darüber hinaus besitzen die verschiedenen Komponenten im Vergleich zur umgebenden Matrix, insbesondere der Betonmatrix, eine geringere Lebensdauer und müssen zu unterschiedlichen Zeitpunkten erneuert oder ausgetauscht werden. Die Komponenten müssen somit demontierbar mit der Matrix verbunden werden.

Um die Tragfähigkeit und Sicherheit des Bauelements zu garantieren, muss die Position der integrierten Komponenten innerhalb der Matrix, im Regelfall der Betonmatrix, definiert sein. Während des Fertigungsprozesses müsste demnach die Lagesicherheit der zu integrierenden Komponenten, wie z. B. der Bewehrung, aber auch der elektrischen Komponenten oder der Montageteile, garantiert werden.

Neben den zuvor benannten Bauelementen "Sandwichwand" und "BIPV" existieren individuelle Einzellösungen, die ein einfaches "Einbetonieren" der Funktionskomponenten vorsehen. Diese wurden für eine spezifische Anwendung und eine spezifische Funktion entwickelt. Eine Übertragbarkeit auf andere Anwendungsgebiete oder die Integration andersartiger Funktionskomponenten ist somit nur sehr bedingt möglich. Sie sind somit sehr unflexibel und eingeschränkt in ihrem Einsatzgebiet und in ihren Absatzzahlen, die Entwicklung und Umsetzung funktionalisierter Bauelemente bedeutet somit einen hohen individuellen Entwicklungsaufwand. Diese Einzellösungen sind weiterhin nicht für eine Mehrfachproduktion im Fertigteilwerk geeignet. Weiterhin entsprechen diese Einzellösungen oftmals nicht den notwendigen Anforderungen an Sicherheit, Tragfähigkeit und Brandbeständigkeit, weshalb sie nur in untergeordneten und sicherheitstechnisch nicht relevanten Bauelementen zum Einsatz kommen können. Weiterhin werden in den beschriebenen Einzellösungen die Funktionskomponenten nicht lösbar mit dem Beton verbunden. Dies erschwert den Rückbau am Ende ihres Lebenszyklus' und verhindert einen Austausch der Funktionskomponenten für Reparatur oder Modernisierung.

Dadurch wird nicht zuletzt die Lebensdauer des Gesamtbauelements verringert. Weiterhin ist die Lagesicherheit der integrierten Funktionskomponenten oftmals nicht gegeben, was eine Qualitätssicherung und die Vorhersage der Funktionsfähigkeit und der statischen Tragfähigkeit erschwert. Weiterhin wird die Dauerhaftigkeit der Funktionskomponenten durch ein einfaches "Einbetonieren" reduziert, da sie für ein feuchtes, alkalisches Milieu nicht geeignet sind. Weiterhin beeinträchtigt die Integration von Funktionskomponenten zumeist die Tragwirkung des Gesamtbauelements, wenn sie an statisch relevanten Stellen eingefügt wurden.

Zudem sind bestehende Lösungen nicht für eine Herstellung großer Stückzahlen geeignet. Herkömmliche Ansätze bieten keine wirtschaftlich sinnvolle Lösung zur Integration von Funktionskomponenten in Fertigteile. Dies bedeutet, dass momentan eine Trennung der Gebäudefunktionen notwendig ist bzw. die wirtschaftlich sinnvollere Alternative darstellt. Die Trennung der einzelnen Planer bzw. Gewerke führt zu einem Mehraufwand bei der Planung, Koordinierung und Umsetzung des Gesamtgebäudes. Kommt es bei einem Gewerk zur Verzögerung, so ist oftmals eine Vielzahl anderer Gewerke betroffen, was insgesamt zu großen Verzögerungen im Bauablauf sowie einer hohen Planungsunsicherheit führt. Die Installation von Gebäudetechnologie auf der Baustelle führt zu einer hohen Fehleranfälligkeit sowie einem großen Koordinierungsaufwand.

Es ist daher die Aufgabe der vorliegenden Erfindung, technische Probleme zu lösen, die einer Integration von Funktionskomponenten, wie beispielsweise elektronischen Komponenten oder intelligenten Werkstoffen, in Bauelemente im Wege stehen. Weiterhin sollen Kompatibilität mit den konventionellen Herstellungsmethoden von Fertigteilwerken und eine einfache Umstellung der Produktion erreicht werden. Aufgabe ist weiterhin die Integration verschiedener Technologien in den Prozess der Fertigteilherstellung.

Die Aufgabe der Erfindung wird gelöst durch eine Aufnahmestruktur, die zum Einguss in ein Matrixmaterial, insbesondere Beton, eines Bauelements vorgesehen ist und zumindest ein Aufnahmeelement aufweist, das aus der Aufnahmestruktur in der Weise auskragt bzw. aus deren Oberfläche herausragt, dass es in das Matrixmaterial wenigstens teilweise hineinragen kann bzw. im eingebauten Zustand hineinragt. Nach der Erfindung weist das wenigstens eine Aufnahmeelement in seinem Inneren einen Aufnahmeraum auf, der zur Oberfläche des späteren Bauelements hin eine Öffnung aufweist. Die Öffnung ist von außerhalb, auch nach dem Einbau in das Bauelement, zugänglich. Durch die Öffnung ist wenigstens ein Funktionsbaustein zum Einsetzen in den Aufnahmeraum einführbar. Es ist weiterhin zumindest ein Lagesicherungselement zur Lagesicherung einer bevorzugt textilen Bewehrung vorgesehen. Die Aufnahmestruktur bedeckt nach einer vorteilhaften Ausführungsform eine Außenfläche des Betonelements zu 80%. Die Aufnahmestruktur gibt in ihrer Funktion als eine verlorene Schalung, die sie nach einer vorteilhaften Ausgestaltung ebenfalls übernehmen kann, maßgeblich die äußere Form des Bauelements vor. Die erfindungsgemäße Aufnahmestruktur ermöglicht eine Positionierung der Bewehrung, wobei das wenigstens eine hierzu vorgesehene Lagesicherungselement zur Ablage und Positionierung eines Garns, insbesondere aus Glas oder Carbon, dient, sodass alternativ eine freie Bewehrungsführung ohne feste vorgegebenes Raster möglich wird. Die Aufnahmestruktur umfasst mindestens einen Steg, mit dem die Aufnahmeelemente gelenkig miteinander verbunden sind. Die Verbindung erfolgt durch eine Pivot-Verbindung, wobei der zumindest eine Steg dünne Stellen, die als verformbarere Stegabschnitte ausgebildet sind, und eine dicke Stelle, die als biegesteifer Stegabschnitt ausgebildet ist, aufweisen.

Damit ist gewährleistet, dass die Aufnahmestruktur auch mehrfach gekrümmt werden kann, zugleich aber die Aufnahmeelemente eine im Wesentlichen tangentiale Lage zu der gekrümmten Fläche einnehmen und selbst keine Verformung erfahren. Die Aufnahmeelemente verbleiben somit unverformt und normal bzw. tangential zur gekrümmten Fläche ausgerichtet. Dadurch wird ein Einsatz der erfindungsgemäßen Aufnahmestruktur auch zur Herstellung von doppelt gekrümmten Bauelementen bzw. mit doppelt gekrümmter Oberfläche möglich.

Das wenigstens eine Aufnahmeelement ist strukturoptimierend in einem strukturmechanisch untergeordneten Bereich eines das Matrixmaterial umfassenden Bauelements in der Weise angeordnet, dass Matrixmaterial verdrängt, zugleich jedoch die Tragfähigkeit eines das Matrixmaterial umfassenden Bauelements weiterhin gewährleistet wird.

Die Aufnahmeelemente sind somit derart ausgeführt, dass sie einen möglichst geringen Einfluss auf das Tragverhalten des erzeugten Bauelements haben; sie werden vorzugsweise in strukturmechanisch nicht relevanten Regionen eingebracht. Die Aufnahmeelemente der Aufnahmestruktur führen somit zu einer Strukturoptimierung, was einen geringeren Einsatz von Beton bei nahezu gleicher Tragwirkung bedeutet. Strukturmechanisch nicht benötigter Beton wird durch die Aufnahmeelemente ersetzt. Die Aufnahmeelemente sind derart angeordnet, dass eine ausreichende Tragfähigkeit des Bauelements gewährleistet werden kann. Zudem kann es modular seriengefertigt und auf spezifische Lastbedingungen, wie z. B. Biegung durch Windlast, optimiert werden. Dieser vorgenannten statischen und materialsparenden Funktion kann die Aufnahmestruktur auch ausschließlich dienen, ohne dass Funktionsbausteine zum Einsatz kommen müssen.

Die Aufnahmeelemente entsprechen in einem inneren Aufnahmeraum der äußeren Form der Funktionsbausteine. Sie können demnach genutzt werden, um die Funktionsbausteine zu integrieren. Die Aufnahmestruktur besitzt vorteilhafterweise eine Vorrichtung, um eine lösbare mechanische Verbindung zwischen Aufnahmestruktur und Funktionsbausteinen sowie weitere Vorrichtungen, um eine Kontaktierung der Funktionsbausteine mit einer Leitung bzw. einem Leitungsnetz herzustellen.

Zur Herstellung der Aufnahmestruktur können kreislauffähige Materialen wie Weißblech oder Kunststoffe, z. B. ABS, eingesetzt werden. Vorzugsweise sind die eingesetzten Materialien alkaliresistent, witterungsbeständig und für eine Herstellung im Spritzguss, Thermoform- oder Tiefziehverfahren geeignet. Thermoformen oder Tiefziehen sind kostengünstige Möglichkeiten diese dreidimensionale Form in Serie herzustellen. Durch dieses Verfahren ist es zudem möglich, ein- oder zweifach gekrümmte Aufnahmestrukturen herzustellen. Dies wiederum ermöglicht die Herstellung von gekrümmten Bauelementen. Weiterhin ist das Material vorzugweise schwer entflammbar und besitzt ein für den Einsatz als Bauelement geeignetes Abtropf- und Rauchentwicklungsverhalten.

Die Aufnahmestruktur dient nach einer vorteilhaften Ausführungsform bzw. Verwendung weiterhin als Schalungselement. Ein Schalungselement ist die Gussform, in welche die flüssige Matrix bzw. das Matrixmarerial, insbesondere die Betonmatrix, eingebracht wird und welches die äußere Form des Bauelements vorgibt. Im Regelfall wird die Schalung nach dem Erhärten des Betons entfernt. Die Aufnahmestruktur verbleibt jedoch nach dem Erhärten der Matrix, insbesondere der Betonmatrix, im Bauelement. Sie bildet zusammen mit der Matrix das Bauelement und gibt dessen wesentliche äußere Form des Bauelements vor. Die Aufnahmestruktur kann als verlorene Schalung genutzt werden.

Zur Erhöhung der Tragfähigkeit wird eine textile Bewehrung eingesetzt. Diese erhöht die Widerstandsfähigkeit des Bauelements gegenüber Zugspannungen. Innerhalb des Bauelements kommt mindestens eine Lage textiler Bewehrung beispielsweise aus Carbon, Glas, Hanf oder Basalt zum Einsatz. Im Regelfall werden zwei Lagen textiler Bewehrung eingesetzt. Sie verlaufen in den Zwischenräumen der Funktionsbausteine und/oder unter der Aufnahmestruktur. Die Anzahl sowie die Lage der einzelnen Bewehrungslagen hängen vom Einsatzgebiet und der Belastung des Bauelements ab.

Sofern nachfolgend nur das bevorzugt eingesetzte Carbongarn genannt ist, so ist dennoch auch eine Verwendung von Carbonfasern oder Carbonrovings vorgesehen. Carbonfasern, Carbongarn oder Carbonrovings kommen beispielsweise auch in Fertigteilen bzw. Bauelementen mit organischer Matrix, beispielsweise faserverstärktem Kunstharz, zum Einsatz. Neben Carbon sind auch andere Materialien für eine textile Bewehrung vorgesehen, wie z. B. AR-Glas oder Basalt.

Die Erfindung betrifft weiterhin ein Bauelement aus Textilbeton mit integrierten Funktionsbausteinen. Die Aufnahmestruktur dient als Halbfertigteil, welche zur Lagesicherung einer textilen Bewehrung, von Montageteilen sowie von elektronischen Komponenten und intelligenten Werkstoffen genutzt wird und in eine tragende Matrix, beispielsweise aus Beton, eingebettet wird.

Vorteilhafterweise sind eine lösbare mechanische Verbindung zwischen der Aufnahmestruktur und dem wenigstens einen Funktionsbaustein sowie eine Kontaktierung des wenigstens einen Funktionsbausteins mit wenigstens einer Leitung vorgesehen. Die Verbindung der Funktionsbausteine mit der Aufnahmestruktur kann durch eine Klick-, Steck- oder Schraubverbindung hergestellt werden. Die Funktionsbausteine werden mit der Aufnahmestruktur zu einem Halbfertigteil verbunden, welches im Anschluss in die Matrix, insbesondere die Betonmatrix, eingefügt werden kann.

Bevorzugt ist die wenigstens eine Leitung als universeller Kanal, als Leerrohr für die Aufnahme anderer Leitungen und/oder als Bewehrung ausgebildet. Es kann aber auch eine elektrische oder eine Fluidleitung sein. Die wenigstens eine Leitung ist bevorzugt mit der Aufnahmestruktur verbunden. Es sind auch Leitungen vorgesehen, die zugleich als Bewehrung dienen. Dies trifft insbesondere auf elektrisch leitende Carbongarne zu.

Darüber hinaus kann auch die Aufnahmestruktur selbst Kanäle zur Integration von Leitungen aufweisen. Die Kanäle werden bereits bei der Herstellung der Aufnahmestruktur, vorzugsweise im Tiefziehverfahren oder im Thermoformverfahren, eingebracht. Die Kanäle können universell, als Leerrohre oder als Kapillarrohre ausgeführt sein. Es sind auch Leitungen vorgesehen, die zugleich als Bewehrung dienen. Dies trifft insbesondere auf elektrisch leitende Carbongarne zu.

Die in den Kanälen liegenden Leitungen, die schon vor dem Betonieren eingebracht sein können, werden zur Übertragung von Energie oder Information genutzt. Sie dienen der Kontaktierung der Funktionsbausteine untereinander. Sie sind derart angebracht, dass sie die Tragfähigkeit des Bauteils möglichst wenig beeinträchtigen. Die Verbindungsstelle zwischen Leitung und Funktionsbaustein ist derart ausgeführt, dass eine einfache Montage sowie Demontage der Funktionsbausteine ermöglicht wird.

Vorteilhafterweise sind wenigstens ein Montageteil und/oder wenigstens ein Lagesicherungselement vorgesehen. Das wenigstens eine mit der Aufnahmestruktur verbundene Montageteil ist in das Matrixmaterial eingebettet und ermöglicht den Transport sowie eine Montage des Bauelements an eine übergeordnete Struktur. Damit ist eine zusätzliche Montageverbindung zur Befestigung, z. B. an einer Aufnahmestruktur als Außenschale einer Vorhangfassade, einer Wand- oder Deckenverkleidung, möglich. Diese weist beispielsweise zumindest eine externe Funktionskomponente, insbesondere ein Photovoltaik-Element, auf.

Die mechanische Verbindung des Bauelements mit der Unterkonstruktion oder anderen Bauelementen kann aber auch durch Klebeverbindungen, durch Niet- oder Durchschraubverbindungen realisiert werden. Als besonders vorteilhaft stellte sich aber die Nutzung von Montageteilen, wie beispielsweise Gewindehülsen, Flachankern oder Ankerschienen, heraus. Diese werden vor dem Betonieren mit der Aufnahmestruktur verbunden. Die Aufnahmestruktur sichert somit die Lage der Montageteile. Nach dem Gießen und Erhärten besteht eine feste mechanische Verbindung der Montageteile mit der Betonmatrix. An diese Montageteile kann im Anschluss ein Befestigungssystem befestigt werden. Die Montageteile ermöglichen eine Verbindung mit anderen Betonelementen oder einer tragenden Unterkonstruktion.

Das wenigstens eine mit der Aufnahmestruktur verbundene Lagesicherungselement ermöglicht eine Lagesicherung der textilen Bewehrung und/oder der wenigstens einen Leitung. Die Aufnahme eines Funktionsbausteins mit der Aufnahmestruktur kann durch eine Klick-, Steck- oder Schraubverbindung hergestellt werden. Die Funktionsbausteine werden mit der Aufnahmestruktur zu einem Halbfertigteil verbunden, welches im Anschluss in die Matrix, insbesondere die Betonmatrix, eingefügt werden kann. Es ist auch vorgesehen, die Funktionsbausteine in Kapseln aufzunehmen, welche dann eine erhöhte bzw. für bestimmte Anwendungen sogar notwendige Dauerhaftigkeit und Brandbeständigkeit besitzen.

Mithilfe der Lagesicherungselemente ist die Bewehrung unmittelbar mit der Aufnahmestruktur verbunden. Die Bewehrung kann somit auch parallel dem Verlauf der Aufnahmestruktur folgen. Es eignet sich insbesondere der Einsatz einer formbaren textilen Bewehrung. Auf diese Weise bleibt das gesamte Halbfertigteil, umfassend Aufnahmestruktur, Bewehrung, Montageteile und Funktionskörper, frei formbar. Dies ermöglicht die Herstellung von gekrümmten bewehrten Betonelementen. Dies ist ein großer Vorteil gegenüber anderen Bewehrungsmaterialien, wie beispielsweise Stahl, welcher sich nur mit erhöhtem Aufwand in gekrümmte Formen bringen lässt.

Die Aufnahmestruktur kann ebenfalls derart ausgeführt werden, dass sie sich leicht einer gekrümmten Fläche anpassen kann. Dies wird dadurch erreicht, dass zwischen den Aufnahmeelementen Stege mit punktförmiger gelenkiger Verbindung angebracht werden. Diese punktförmige Verbindung ermöglicht eine freie Verdrehung des Aufnahmeelements. Jedes Aufnahmeelement besitzt mindestens eine, vorzugsweise jedoch vier Verbindungsstellen.

Als Bewehrung eignet sich insbesondere der Einsatz von Gelegen. Diese weisen bereits ein rechteckiges Raster aus Schuss- und Kettfaden, beispielsweise auch Rovings, auf, welches durch Wirkfäden zusammengehalten wird. Dieses textile Gelege wird durch die Lagesicherungselemente mit der Aufnahmestruktur verbunden. Es hat sich daher als vorteilhaft erwiesen, wenn das Bauelement eine textile Bewehrung aufweist, deren Garne beispielsweise als ein Gelege ausgeführt ein rechteckiges Raster bilden, welches bevorzugt durch einen Verbindungsfaden oder Klebestellen zusammengehalten wird. Der Abstand der Mittelpunkte der Aufnahmeelemente beträgt ein Vielfaches der Maschenweite des Rasters, der Außendurchmesser der Aufnahmeelemente ist kleiner als die Maschenweite des Rasters. Beide Voraussetzungen vereinfachen die Verbindung der textilen Bewehrung mit der Aufnahmestruktur. Das Gelege bzw. Gewebe ist insbesondere lastabhängig ausgerichtet bezüglich der Aufnahmeelemente.

Daneben können auch Einzelgarne bzw. Rovings (z. B. aus Carbon-, Glas-, Basalt- oder Naturfasern) zum Einsatz kommen. Statt einer textilen Bewehrung mit vorgegebenem, rechteckigem Raster kann das Einzelgarn bzw. der Roving frei in den Lagesicherungselementen einzeln abgelegt und mit den Lagesicherungselementen verbunden werden. Die Rovings bzw. die Bewehrung kann somit einem Verlauf folgen, welcher lediglich durch die Orte der Lagesicherungselemente vorgegeben ist. Die Rovings können somit genau an den Stellen abgelegt werden, an denen sie strukturmechanisch benötigt werden und bilden eine kraftflussgerechte Bewehrungsführung. Die Aufnahmestruktur ermöglicht auf diese Weise eine einfache Herstellung von Bauelementen mit kraftflussgerechter Bewehrungsführung.

Die textile Bewehrung wird durch die Lagesicherungselemente auch in einem definierten Abstand zur Aufnahmestruktur gehalten. Wird die Aufnahmestruktur verformt, um freigeformte Bauteile herzustellen, so folgt der Verlauf des Garns bzw. der Rovings der Aufnahmestruktur. Diese Lagesicherung der textilen Bewehrung ist notwendig, um das Tragverhalten des Bauelements zu garantieren. Die Tragfähigkeit hängt maßgeblich von der Lage des Textils innerhalb der Matrix, insbesondere der Betonmatrix, ab.

Die textile Bewehrung lässt sich weiterhin zum Daten- und/oder Energietransport einsetzen. Dafür wird entweder unmittelbar das Material (z. B. Carbon) genutzt oder ein zusätzliches leitendes Element (z. B. Kupferdraht) in das Textil eingebracht. Das Textil kann somit genutzt werden, um die einzelnen Funktionsbausteine miteinander zu verbinden. Zur Kontaktierung werden die Funktionsbausteine über die Lagesicherungselemente mit der leitenden Bewehrung verbunden. Dafür sind die Lagesicherungselemente leitend auszuführen oder besitzen bevorzugt eine Öffnung für Kabel bzw. Mittel zur Kontaktierung.

Zur mechanischen und elektrischen Verbindung der textilen Bewehrung mit der Aufnahmestruktur werden ebenfalls Steck-, Klick-, oder Schraubverbindungen eingesetzt. Diese dienen im Wesentlichen dazu, eine Lagesicherheit der textilen Bewehrung zu gewährleisten. Diese Lagesicherung der textilen Bewehrung ist notwendig, um das Tragverhalten des Bauelements zu garantieren. Die Tragfähigkeit hängt maßgeblich von der Lage des Textils innerhalb der Matrix, insbesondere der Betonmatrix, ab.

Statt einer textilen Bewehrung mit vorgegebenem, rechteckigem Raster kann der Roving (Carbon, Glas, Basalt, Naturfaser) auch frei in den Lagesicherungselementen abgelegt werden. Dadurch kann die Bewehrung kraftflussgerecht an der Aufnahmestruktur und somit im späteren Betonbauelement befestigt werden. Dadurch wird eine serielle Produktion von strukturoptimierten Betonprodukten ermöglicht.

Das Garn kann auch eingesetzt werden, um Informationen oder Energie zu leiten. Dafür wird für die Herstellung des Textils ein geeignetes Material, wie beispielsweise elektrisch leitfähiges Carbon, genutzt oder zusätzliche Leitungsbänder bzw. Kabel in die textile Bewehrung eingearbeitet. Soll die textile Bewehrung zum Daten- oder Energieaustausch eingesetzt werden, so werden die Lagesicherungselemente zur Kontaktierung des Garns bzw. des Rovings mit den außenliegenden Funktionsbausteinen eingesetzt. Dafür können beispielsweise die Lagesicherungselemente leitend ausgeführt werden. Sie sind mit dem Garn, dem Roving bzw. mit einem darin integrierten Kabel (z. B. ein Kupferkabel) verbunden und leiten Informationen oder die Energie in bzw. aus den Funktionsbausteinen in das Garn oder den Roving. An den Funktionsbausteinen selbst sind Kontaktstellen vorgesehen, um eine einfache und demontierbare Verbindung mit diesen Lagesicherungselementen herzustellen. Die Leitung über das Garn stellt eine Alternative zum Leitungsnetz der Aufnahmestruktur dar.

Durch die Lagesicherungselemente und Kontaktbausteine ist eine einfache Integration weiterer Elemente in das Bauelement möglich. Diese Erfindung sieht vor allem die Integration von Kapillarrohren und/oder heizbaren Textilien vor. Die heizbaren Textilien sind flächig und vor dem Betonieren wie eine Bewehrung verlegt und außerdem mit einer Regeleinheit kontaktiert. Sie werden dazu über die Lagesicherungselemente mit einem Kontaktbaustein verbunden. An das heizbare Textil kann Strom angelegt werden, wodurch sich das Textil sowie dessen umgebende Matrix, insbesondere die Betonmatrix, aufheizt. Das Bauelement kann auf diese Weise zum Heizen genutzt werden. Die Heizleistung wird über einen hierfür vorgesehenen Funktionsbaustein geregelt.

Die Kapillarrohre werden ebenfalls durch Lagesicherungselemente mit der Aufnahmestruktur verbunden. Durch die Lagesicherungselemente können die Kapillarrohre in einer definierten Position gehalten werden. Die Kapillarrohre werden an die Funktionsbausteine angeschlossen, welche durch Ventile und/oder Pumpen den Durchfluss des Fluids und somit die Heiz- bzw. Kühlleistung regeln.

Die vorliegende Erfindung zielt demnach auch darauf ab, Funktionskomponenten wie elektronische Bauelemente oder intelligente Werkstoffen, welche selbstständig auf sich verändernde Umgebungsbedingungen (z. B. Temperaturänderungen, mechanische Belastungen, Feuchtigkeit) reagieren, derart in Fertigteile zu integrieren, dass sie den baurechtlichen Anforderungen gerecht werden. Das Betonfertigteil in Kombination mit den integrierten Funktionskomponenten bildet ein funktionalisiertes Bauelement. Dieses kann neben den konventionellen Aufgaben eines Betonfertigteils, wie dem Ableiten von Kräften, dem Witterungsschutz oder der Ästhetik, eine Vielzahl zusätzlicher Aufgaben übernehmen.

Um den Anforderungen an Bauelemente zu genügen und die zu integrierenden Komponenten zu schützen, werden Kapseln eingesetzt, welche die zu integrierenden Komponenten umhüllen. Diese funktionalisierten Kapseln werden im Folgenden als Funktionsbausteine bezeichnet. Eine einheitliche Geometrie und standardisierte Verbindungs- und Kontaktierungsstellen der Funktionsbausteine ermöglichen eine einfache Verbindung mit der Aufnahmestruktur und die Fertigung hoher Stückzahlen.

Die äußere Gestalt des Funktionsbausteins entspricht der Gestalt der Aussparungen der Aufnahmeelemente, die wiederum ebenso wie die Position prinzipiell frei wählbar ist. Um eine Produktion in Serie zu ermöglichen, sind jedoch möglichst gleiche Geometrien und eine festes Raster zumindest innerhalb einer Produktion bzw. Serie anzustreben. Dabei stellten sich zylindrische, kubische oder hexagonale Geometrien als vorteilhaft heraus. Weiterhin sind die Kanten der Funktionsbausteine abzuschrägen. Dies verringert die Kerbwirkung und trägt zu einer höheren Festigkeit des Gesamtkörpers bei.

Die Hülle bzw. die Kapselung der Funktionsbausteine schützt die innenliegenden elektrischen Komponenten und Materialien vor Feuchtigkeit. Die Kapselung kann beispielsweise aus Kunststoff hergestellt werden. Zum Transport von Informationen und Energie weist der Funktionskörper Kontaktstellen. Über diese Kontaktstellen kann der Funktionskörper im Anschluss mit dem Leitungsnetz der Aufnahmestruktur und/oder weiteren Funktionskomponenten verbunden werden.

Als besonders vorteilhaft hat sich die Integration von erneuerbaren Energie-Technologien in Fertigteile herausgestellt. Die integrierten Funktionskomponenten dienen dabei der thermischen oder elektrischen Energiegewinnung, der thermischen oder elektrischen Energiespeicherung sowie dem Energiemanagement. Die unterschiedlichen erneuerbaren Energie-Technologien können mit Hilfe der Erfindung zu einem individuellen Gesamtsystem, welches den Ansprüchen des Bauherrn genügt, zusammengefügt werden.

Es können unterschiedliche Technologien und Materialien in die Funktionsbausteine eingebracht werden. Somit können die Funktionsbausteine eine Vielzahl an Funktionen übernehmen. Je nach Ausführung der Funktionsbausteine kann das Bauelement bzw. das Fertigteil verschiedene Aufgaben übernehmen. Beispielhaft werden einige Funktionsbausteine vorgestellt.

Nach einer vorteilhaften Ausführungsform der Aufnahmestruktur bzw. des Funktionsbausteins im Besonderen ist der wenigstens eine Funktionsbaustein als Speicher für thermische oder elektrische Energie ausgeführt. Zur elektrischen Energiespeicherung werden Stromspeicher in das Bauelement integriert. Durch die elektrische Energiespeicherung können Differenzen zwischen Angebot und Nachfrage bei der Stromversorgung ausgeglichen werden.

Nach einer weiteren Ausführungsform ist die Aufnahmestruktur bzw. im Besonderen der wenigstens eine Funktionsbaustein zur thermischen oder elektrischen Energiegewinnung ausgeführt. Zur thermischen Energiepufferung werden die Funktionsbausteine mit sogenanntem Phase-Change-Material (PCM) befüllt. Diese PCM-Funktionsbausteine speichern einen Großteil der ihnen zugeführten thermischen Energie in Form von latenter Wärme.

Nach einer alternativen Ausführungsform der Aufnahmestruktur bzw. des Funktionsbausteins im Besonderen umfasst der wenigstens eine Funktionsbaustein wenigstens einen Sensor zur Erfassung von Temperatur, Feuchtigkeit oder anderen physikalische Größen und/oder zur bidirektionalen Übertragung von Informationen zwischen bauelementinternen und bauelementexternen Empfängern.

Nach einer weiteren alternativen Ausführungsform der Aufnahmestruktur bzw. des Funktionsbausteins im Besonderen umfasst der wenigstens eine Funktionsbaustein eine Regeleinrichtung, die ausgeführt ist, um die von dem wenigstens einen Sensor erfassten Daten und/oder die empfangenen oder die zu sendenden Informationen zu verarbeiten und/oder die Funktion weiterer Funktionsbausteine zu steuern oder zu regeln und somit die Funktionalität des gesamten Bauelements zu steuern oder zu regeln, wobei beim Einsatz von Kapillarrohren werden Durchflussregler oder Einrichtungen für ein Energiemanagement vorgesehen sind.

Nach einer weiteren alternativen Ausführungsform der Aufnahmestruktur bzw. des Funktionsbausteins im Besonderen umfasst der wenigstens eine Funktionsbaustein Einrichtungen zur Signalisierung. Diese dient der Übertragung von bauelementinternen Informationen an bauelementexterne Empfänger oder umgekehrt.

Nach einer weiteren alternativen Ausführungsform der Aufnahmestruktur bzw. des Funktionsbausteins im Besonderen umfasst der wenigstens eine Funktionsbaustein eine Regeleinrichtung, die ausgeführt ist, um die von dem wenigstens einen Sensor erfassten Daten und/oder die empfangenen oder die zu sendenden Informationen zu verarbeiten und/oder die Funktion weiterer Funktionsbausteine zu steuern oder zu regeln und somit die Funktionalität des gesamten Bauelements zu steuern oder zu regeln, wobei beim Einsatz von elektrischen Speichern werden beispielsweise Spannungs- und Stromregler, beim Einsatz von Kapillarrohren werden Durchflussregler oder Einrichtungen für ein Energiemanagement vorgesehen sind.

Nach einer weiteren alternativen Ausführungsform der Aufnahmestruktur bzw. des Funktionsbausteins im Besonderen ist der wenigstens eine Funktionsbaustein als Anschlussbaustein, einen externen Ausgang umfassend, ausgeführt und ist so ausgeführt bzw. beinhaltet Komponenten, um insbesondere bauelementinterne Flüssigkeiten, Informationen oder Energie insbesondere auch zu bündeln und über einen externen Ausgang, beispielsweise bestehend aus Leitungen und Rohren, nach außen zu führen. Über diese Schnittstelle wird beispielsweise elektrische Energie aus den Speichern oder dem PV-Modul sowie Flüssigkeiten aus dem Kapillarrohrsystem in das bzw. aus dem Bauelement geleitet. Diese Funktion wird im Bauelement universell oder fallweise, auch im Sine einer Redundanz, eingesetzt.

Nach einer weiteren alternativen Ausführungsform der Aufnahmestruktur bzw. des Funktionsbausteins im Besonderen ist der wenigstens eine Funktionsbaustein als Kontaktbaustein ausgeführt und ermöglicht eine einfache Kontaktierung von unterschiedlichen Zusatzeinrichtungen, je nach Ausführung, wie heizbaren Textilien oder Kapillarrohren, die z. B. eine thermische Energiegewinnung ermöglichen. Die Kontaktbausteine verfügen auf der Unterseite über die Lagesicherungselemente eine Kontaktstelle zur Verbindung mit dem heizbaren Textil oder den Kapillarrohren und sind auf der anderen Seite mit dem Leitungsnetz der Aufnahmestruktur verbindbar. Durch die Kontaktbausteine wird eine einfache Kontaktierung dieser Zusatztechnologien ermöglicht. Dadurch wird eine Regelung der Funktionskomponenten möglich.

Neben heizbaren Textilien und Kapillarrohren können auch externe Funktionskomponenten, beispielsweise auch ein Solar- bzw. Photovoltaik-Modul, an das Bauelement angebracht werden. Dieses wandelt Licht in elektrische Energie um. Zur mechanischen Befestigung des Photovoltaik-Moduls an dem Bauelement werden Lagesicherungselemente bereits vor dem Betonieren in die Aufnahmestruktur eingebracht. Im Anschluss wird das Bauelement gegossen. Nach dem Ausharten des Betons wird das Photovoltaik-Modul mit dem Bauelement verbunden. Die Kontaktierung erfolgt durch eine Verbindungsöffnung. Diese Verbindungsöffnung wird durch ein Rohr erzeugt, welches an der Aufnahmestruktur befestigt ist. Durch diese Öffnung kann eine Verbindung zwischen Photovoltaik-Modul und einem Funktionsbaustein, besonders geeignet ist der Kontaktbaustein, hergestellt werden. Auch zum Transport der Medien, wobei auch Information, Flüssigkeit oder Energie umfasst sind, aus dem Bauelement heraus bzw. in das Bauelement hinein sind ebenfalls Kontaktbausteine notwendig. Die Lage deren Kontaktierungsstelle ist relativ zu den mechanischen Verbindungen definiert. Dieser relative Abstand ist bevorzugt standardisiert. Dadurch werden Austauschbarkeit und Modularität erreicht.

Ein weiterer Aspekt der vorliegenden Erfindung betrifft ein Bauelement, umfassend eine textile Bewehrung, ein Matrixmaterial, insbesondere eine mineralische Matrix, und Leitungen, insbesondere für die Durchleitung von Elektrizität und/oder Fluiden. Nach der Erfindung ist es vorgesehen, dass eine Aufnahmeelemente aufweisende Aufnahmestruktur gemäß vorstehender Beschreibung, entsprechenden den Ansprüchen 1 bis 7, in die Matrix bzw. das Matrixmaterial eingebettet sowie über Lagesicherungselemente an die textile Bewehrung und/oder die Leitungen angebunden ist. Die textile Bewehrung ist lastabhängig bezüglich der Aufnahmeelemente ausgerichtet und die Aufnahmeelemente der Aufnahmestruktur sind derart ausgeführt, dass ein Einfluss auf das Tragverhalten des erzeugten Bauelements minimiert wird. Die Aufnahmeelemente werden vorzugsweise in Regionen untergeordneter strukturmechanischer Relevanz eingebracht.

Besonders vorteilhaft ist die Integration verschiedener Technologien in den Prozess der Fertigteilherstellung. Dies wird erreicht, indem Funktionskomponenten in das Bauelement integriert werden und das Bauelement dadurch Aufgaben wie Tragen, Einhüllen sowie Ver- und Entsorgen erfüllen kann. Die vorliegende Erfindung zielt demnach insbesondere auf eine Herstellung von Bauelementen in Fertigteilbauweise ab. Fertigteile sind aus Rohstoffen oder Halbzeug vorgefertigte Bauelemente, die ohne weitere Bearbeitung in einem Endprodukt, hier insbesondere einem Gebäude, eingesetzt werden können.

Der Herstellungsprozess des Bauelements sieht zunächst die Herstellung der Aufnahmestruktur, durch einen Tiefziehprozess oder ein anderes bekanntes Verfahren, vor. Im Anschluss werden die textile Bewehrung sowie gegebenenfalls Montageteile und Funktionsbausteine an der Aufnahmestruktur befestigt. Zur Befestigung sowie Kontaktierung werden Steck-, Schraub-, oder Klickverbindungen eingesetzt und mit der Aufnahmestruktur verbunden. Sofern Kunststoffteile zum Einsatz kommen, hat sich das Kaltschmelzverfahren als besonders vorteilhaft erwiesen um die Elemente mit der Aufnahmestruktur zu verbinden.

Zusätzlich können Funktionsbausteine und Montageteile wie Verankerungselemente mit der Aufnahmestruktur verbunden und kontaktiert werden. Das so hergestellte Halbzeug wird im Anschluss in eine Matrix, insbesondere in den Beton, eingegossen.

Der Herstellungsprozess wird im Wesentlichen durch die Aufnahmestruktur beeinflusst. Diese ermöglicht eine einfache Integration von Funktionskomponenten in den konventionellen Herstellprozess von Fertigteilen. Dabei ist insbesondere die Lagesicherung von Montageteilen, Funktionsbausteinen und textiler Bewehrung mithilfe der Aufnahmestruktur von großem Vorteil. Das so hergestellte Halbfertigteil wird im Anschluss in ein Schalungselement eingesetzt und dieses danach mit einem Matrixmaterial ausgegossen. Die Unterseite der Aufnahmestruktur zeigt vorzugsweise zur Schalungsunterseite. Die Verbindung zwischen Schalelement und Aufnahmestruktur kann durch eine magnetische oder durch eine Klebe- oder Klemmverbindung ausgeführt werden. Durch das Halbfertigteil wird eine Produktion von funktionalisierten Bauelementen in Serie ermöglicht. Ein beispielhafter Herstellprozess setzt sich zusammen aus den Schritten:
i) Herstellung der Aufnahmestruktur im Tiefzieh- oder Thermoformverfahren mit Leitungskanälen, Löchern und Aufnahmeelemente zur Integration der Funktionsbausteine;
ii) Zusammenführung der Aufnahmestruktur mit Leitungen, Funktionsbausteinen, Montageteile (Gewindehülsen etc.), Lagesicherungselemente, textile Bewehrung, Funktionsbaustein und/ oder weiteren Funktionalitäten (Kapillarrohrsystem, textile Heizung);
iii) Einbau der Aufnahmestruktur in ein Schalungselement;
iv) Betonieren und Lagerung des Bauelements zum Aushärten;
v) Ausschalen des Elements, Aufnahmestruktur mit Funktionskörpern verbleibt dabei im Bauelement und
vi) Anbringen und Kontaktieren externer Funktionskomponenten (beispielsweise Photovoltaik-Modul) mit dem Bauelement.

Das Halbzeug, bestehend aus Aufnahmestruktur, Montageteilen, textiler Bewehrung und Funktionselementen, bildet den Kern der erfindungsgemäßen Aufnahmestruktur. Wesentlich ist dabei die Zusammenführung von textiler Bewehrung, Montageteilen sowie Funktionskörpern in einem einzigen Halbzeug, welches erst nach dem Zusammenfügen mit der Matrix, insbesondere der Betonmatrix, verbunden wird. Die Aufnahmestruktur sorgt für eine Lagesicherung der Komponenten. Die Komponenten werden kontrolliert an statisch nicht relevanten Stellen in das Matrixmaterial, insbesondere in die Betonmatrix, eingebracht.

Im Unterschied zu bestehenden Lösungen werden die Funktionselemente während der Herstellung nicht fest einbetoniert, sondern über die Aufnahmestruktur demontierbar mit der Matrix, insbesondere der Betonmatrix, verbunden. Weiterhin ist vorteilhaft, dass das erfindungsgemäße Bauelement als Halbfertigteil wie eine verlorene Schalung eingesetzt werden kann und in der Matrix, insbesondere der Betonmatrix, verbleibt. Das Halbfertigteil ist frei formbar. Durch die Aufnahmestruktur wird trotz Verformung eine Lagesicherheit der textilen Bewehrung garantiert. Dadurch wird die Herstellung ein- oder zweifachgekrümmter, bewehrter Betonelemente ermöglicht.

Die Erfindung ermöglicht eine dauerhafte und positionssichere Integration unterschiedlicher Funktionskomponenten wie elektronische Komponenten oder intelligente Werkstoffe in eine Matrix, insbesondere die Betonmatrix. Dies wird durch eine Kapselung der Technologien in Funktionsbausteinen sowie deren Kontaktierung durch die Aufnahmestruktur ermöglicht. Die einzelnen Funktionskomponenten können zu Systemen zusammengeführt werden. Es entsteht ein statisch tragendes Fertigteil mit integrierten Funktionen, welches als Bauelement nutzbar ist. Auf diese Weise wird die Herstellung neuartiger Bauelemente wie beispielsweise statisch tragende elektrische Energiespeicher ermöglicht.

Ein zusätzlicher Vorteil ist die strukturmechanische Bauelementoptimierung, welche durch den Einsatz der Aufnahmestruktur ermöglicht wird und wofür sie auch ausschließlich eingesetzt werden kann. Die Aufnahmeelemente der Aufnahmestruktur sind an strukturmechanisch gering belasteten Bereichen eingebracht. An diesen Stellen wird also im Vergleich zu einer Massivplatte Material verdrängt und damit eingespart, während die Tragfähigkeit der Platte nur geringfügig beeinträchtigt wird. Ein großer Vorteil der Erfindung ist, dass diese Strukturoptimierung nun standardisiert und in einer seriellen Produktion ermöglicht wird. Die Tragfähigkeit im Verhältnis zum eingesetzten Material, insbesondere Beton, kann somit in einer einfachen Art und Weise verbessert werden.

Ein weiterer wesentlicher Vorteil ist die Flexibilität der Aufnahmestruktur bzw. des Halbzeugs. Dies ermöglicht eine erhöhte architektonische Gestaltungsfreiheit. Das gesamte Bauelement kann eine Form annehmen, welche die Kräfte optimal leitet. Dies kann zu einer Verringerung des eingesetzten Materials führen. Weiterhin folgt die Bewehrung der Aufnahmestruktur. Dies ermöglicht eine kraftflussgerechte Integration der Bewehrung. Die Bewehrung kann somit in eine Position im Bauelement eingebracht werden, an der sie strukturmechanisch benötigt wird.

Ein großer Vorteil, welcher durch den Einsatz der Aufnahmestruktur erzeugt wird, ist die Sicherung der Lage der Bewehrung sowie der Montageteile im Bauelement. Durch die Sicherung der Lage kann die Tragfähigkeit des Bauelements garantiert werden.

Auch die Funktionsbausteine sind in ihrer Lage definiert. Dies ist wichtig, um die Qualität des Bauelements zu gewährleisten.

Ein weiterer wesentlicher Vorteil ist die Tatsache, dass eine einzige Aufnahmestruktur die Integration unterschiedlicher Funktionskomponenten ermöglicht. Bauelemente können so individuell und je nach Anwendungsszenario funktionalisiert werden. Unterschiedliche Funktionskomponenten können zu Gesamtsystemen zusammengeführt werden. Weiterhin können sie individuell dimensioniert werden. So kann z. B. die Stromkapazität angepasst werden, indem mehr Speicherbausteine eingebaut werden.

Ein weiterer Vorteil ist die einfache Kontaktierung und Austauschbarkeit der Funktionsbausteine. Dies ermöglicht das Austauschen von defekten Elementen oder das Anpassen der Funktionalität noch nach der Herstellung des Bauelements bzw. des Gebäudes.

Ein weiterer Vorteil ist, dass viel Raum zur Funktionsintegration zur Verfügung steht. Zur Erfüllung der Funktionalität können somit auch Materialien eingesetzt werden, welche vermeintlich schlechtere Kennwerte (z. B. Leistungs- oder Energiedichten) aufweisen. Dadurch können ökologisch und ökonomisch bessere Materialien und Produkte eingesetzt werden.

Ein weiterer großer Vorteil ist die Möglichkeit, das Halbfertigteil in Serie zu produzieren. Gleichzeitig besteht durch die Modularität und Austauschbarkeit der Funktionsbausteine die Möglichkeit, die Funktionalitäten individuell anzupassen. Die Formbarkeit lässt eine individuelle Formgebung zu. Dies ermöglicht eine kundenindividuelle Massenproduktion.

Der Vorteil der Erfindung ist, dass viel Raum zur Funktionsintegration zur Verfügung gestellt wird, ohne dass die Tragfähigkeit des Bauelements gravierend beeinträchtigt wird. Zur Erfüllung der jeweiligen Funktionalität (z. B. elektrische Energiespeicherung) steht somit viel Raum zur Verfügung. Es können somit auch Materialien eingesetzt werden, welche vermeintlich schlechtere Kennwerte (z. B. Leistungs- oder Energiedichten) aufweisen. Dies ermöglicht den Einsatz von robusten, kreislauffähigen und lokal verfügbaren Materialien, was auf Systemebene zu einer ökologisch und ökonomisch sinnvolleren Lösung führt.

Der Hauptvorzug der vorliegenden Erfindung ist die Integration verschiedenartiger Funktionskomponenten in Fertigteile derart, dass das durch die Zusammenführung entstehende Bauelement allen Anforderungen, welche an Bauelemente gestellt werden (z. B. Dauerhaftigkeit, Brandbeständigkeit, Sicherheit) genügt und außerdem eine Produktion großer Stückzahlen im Fertigteilwerk sowie darüber hinaus eine einfache Montage und Demontage einzelner Funktionskomponenten ermöglicht werden. Die Erfindung hat darüber hinaus die Aufgabe, integrierte elektronische Komponenten miteinander zu vernetzen und die Integration verschiedenartiger Funktionskomponenten in ein einziges Fertigteil zu ermöglichen. Weiterhin ist vorteilhaft, dass eine textile Bewehrung sowie Montageteile, wie z. B. Verankerungselemente, dauerhaft mit der Matrix, insbesondere die Betonmatrix, des Fertigteils verbunden werden können.

Vorteil der Erfindung ist zudem die einfache Integration verschiedenartiger Technologien in den Herstellungsprozess von Fertigteilen aus Beton. Dies wird ermöglicht durch die erfindungsgemäße Aufnahmestruktur, welche als Halbzeug hergestellt wird und als Träger für die Funktionsbausteine, Montageteile und textilen Bewehrung dient. Die Aufnahmestruktur ermöglicht einen hohen Vorfertigungsgrad und kann in konventionelle Herstellprozesse eingefügt werden, was den Zeit- und Kostenaufwand für die Montage verringert. Weiterhin kann sie auch als Schalung eingesetzt werden und somit die Form des Bauelements vorgeben. Als Kernaufgabe sichert sie die Lage der einzelnen Komponenten innerhalb des Fertigteils. Eine definierte Lage der einzelnen Komponenten, insbesondere Bewehrung, Funktionskomponenten und Montageteile, in strukturell nicht relevanten Bereichen ist wichtig, um die Tragfähigkeit des Bauelements zu garantieren.

Die vorliegende Erfindung bietet die Vorteile eines funktionalisierten Bauelements. Das durch den Einsatz der Aufnahmestruktur funktionalisierte Bauelement hat im Wesentlichen den Vorteil, den bautechnischen Anforderungen an Sicherheit zu genügen. Darüber hinaus bestehen die vorgesehenen vorteilhaften Funktionen des Tragens (bzw. der Leitung von Kräften), des Einhüllens (z. B. Sicht-, Witterungs-, Schall-, Brandschutz), sowie des Ver- und Entsorgens (z. B. Wärme, Wasser, Elektrizität). Die Erfüllung der vorteilhaften Funktionen Ver- und Entsorgen wird durch die integrierten Funktionsbausteine ermöglicht. Die Erfüllung der Vorteile des Tragens und Einhüllens wird durch textilbewehrten Beton erfüllt.

Grundsätzlich lasst sich durch den Gegenstand der Erfindung eine Vielzahl unterschiedlicher Funktionalitäten in das Bauelement integrieren und in eine serielle Produktion in Fertigteilwerken überführen. Beispielhaft seien im Folgenden einige der Vorteile bzw. Funktionalitäten der so erzeugten funktionalisierten Bauelemente aufgeführt:
Die vorliegende Erfindung bietet Vorteile bei einer elektrischen Energiespeicherung. Eine Möglichkeit der Funktionalisierung ist die Integration von elektrischen Speicherelementen. Die Entwicklung von Speichersystemen stellt momentan eine große Herausforderung beim Umbau auf erneuerbare Energien dar. Sie dienen zum Ausgleich zwischen schwankendem Energieangebot und sich verändernder Energienachfrage. Stromspeicher können Lastspitzen sowie Angebotsspitzen ausgleichen, flexibilisieren die Energieversorgung und garantieren in dezentralen Netzen eine Versorgungssicherheit. Ökonomische Vorteile bringen Energiespeicher in Wohnhäusern beispielsweise durch die Speicherung von günstigem Nachtstrom. Das funktionalisierte Bauelement hat den Vorteil der Energiespeicherung.

Die vorliegende Erfindung bietet die Vorteile einer elektrischen Energiegewinnung. Die Funktionskörper ermöglichen eine einfache Integration von Photovoltaik-Modulen. Vorteil des so funktionalisierten Bauelements ist die Umwandlung von Lichtenergie in elektrische Energie.

Die vorliegende Erfindung bietet die Vorteile einer thermischen Energiespeicherung. Das erfindungsgemäße Bauelement hat in diesem Fall die Vorteile der Wärme- und Kältespeicherung bzw. der Begrenzung von Temperaturspitzen. Auf diese Weise kann eine Temperierung (Raumkühlung, Heizung) des Gebäudes erreicht werden. Erreicht wird dies durch die Integration von Latentwärmespeichern (sogenannten PCM-Material) in die Funktionsbausteine. Weiterhin kann dies durch eine Bauelementaktivierung durch integrierte Kapillarrohre erreicht werden. Die vorliegende Erfindung bietet auch die Vorteile einer thermischen Energiegewinnung durch die Umwandlung der Sonnenenergie in nutzbare thermische Energie. Dies wird beispielsweise ebenfalls durch Kapillarrohre ermöglicht.

Die vorliegende Erfindung bietet die Vorteile hoher architektonischer Flexibilität. Ein mögliches Einsatzszenario funktionalisierter Platten sind Fassaden. Diese haben neben dem technischen auch einen ästhetischen Vorteil. Um diese zu erfüllen, soll die äußere Form des Bauelements möglichst flexibel zu gestalten sein.

Die vorliegende Erfindung bietet Vorteile bei der Einsparung von Ressourcen. Ein wesentlicher Vorteil der Erfindung ist die Optimierung von Bauelementen. Ziel ist bei möglichst geringem Materialaufwand eine ausreichende Tragfähigkeit zu erhalten. Erreicht wird dies durch eine optimierte Form und Lage der Funktionsbausteine, eine optimierte äußere Form des Betonelements sowie durch eine optimierte Bewehrungsführung. Hierzu trägt auch bei, dass die Komponenten demontierbar mit der Matrix verbunden werden und damit reparier- und generell austauschbar sind.

Zur Erhöhung der Effizienz bei der Fertigung von Bauteilen bzw. Bauwerken trägt auch die Kompatibilität der erfindungsgemäßen Bauelemente bzw. der nicht von der Erfindung umfassten Verfahren zu ihrer Herstellung mit den konventionellen Herstellungsmethoden von Fertigteilwerken bei.

Anhand der Beschreibung von Ausführungsbeispielen und ihrer Darstellung in den zugehörigen Zeichnungen wird die Erfindung nachfolgend näher erläutert. Es zeigen:
Fig. 1: eine schematische Darstellung einer Ausführungsform eines Bauelements vor dem Vergießen mit Beton in perspektivischer Ansicht von oben;
Fig. 2: eine schematische Darstellung einer Ausführungsform eines Bauelements vor dem Vergießen mit Beton in perspektivischer Ansicht von unten;
Fig. 3: eine schematische Darstellung einer weiteren Ausführungsform eines Bauelements mit eingebetteten Leitungen vor dem Vergießen mit Beton in perspektivischer Ansicht von oben;
Fig. 4: eine schematische Darstellung einer weiteren Ausführungsform eines Bauelements mit eingebetteten Leitungen vor dem Vergießen mit Beton in perspektivischer Ansicht von unten;
Fig. 5: eine schematische perspektivischer Darstellung einer weiteren Ausführungsform eines Bauelements vergossen mit Beton;
Fig. 6: eine schematische perspektivischer Explosivdarstellung einer weiteren Ausführungsform eines Bauelements mit aufgesetztem Photovoltaik-Modul;
Fig. 7: eine schematische perspektivische Darstellungen von Ausführungsformen von unterschiedlichen mit der Aufnahmestruktur verbundenen Verbindungselementen;
Fig. 8 und 9: eine erfindungsgemäße Ausführungsform einer flexiblen Aufnahmestruktur
Fig. 10: eine schematische perspektivische Darstellung einer erfindungsgemäßen Ausführungsform einer flexiblen Aufnahmestruktur mit Elementen zur freien Garnablage;
Fig. 11: eine schematische perspektivische Darstellung einer nicht erfindungsgemäßen Ausführungsform einer
   Aufnahmestruktur mit Kabelkanal und
Fig. 12: eine schematische perspektivische Darstellung einer Ausführungsform einer weiteren, nicht erfindungsgemäßen
   Ausführungsform einer Aufnahmestruktur mit Funktionsbaustein und Aufnahmeelement.

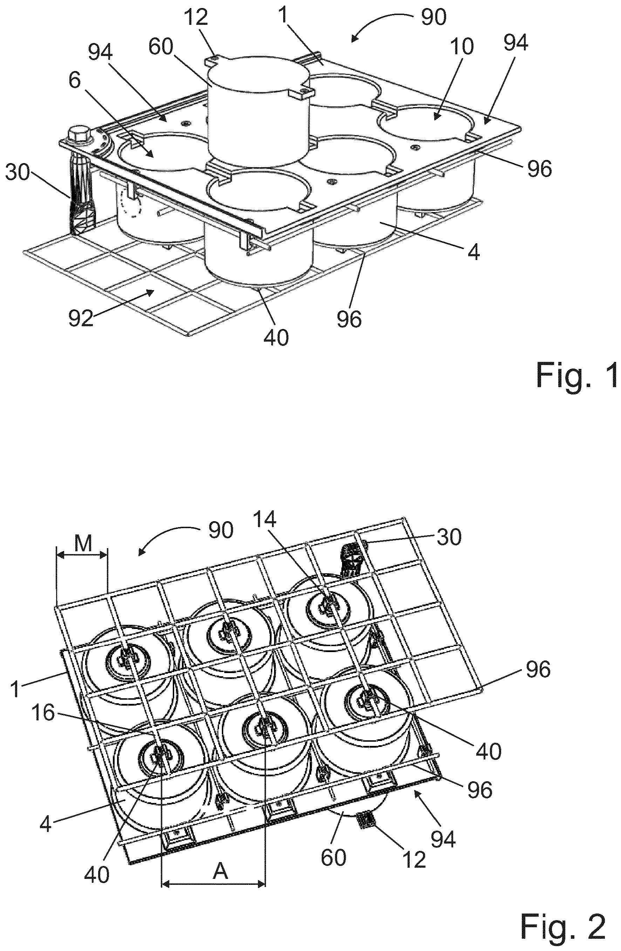

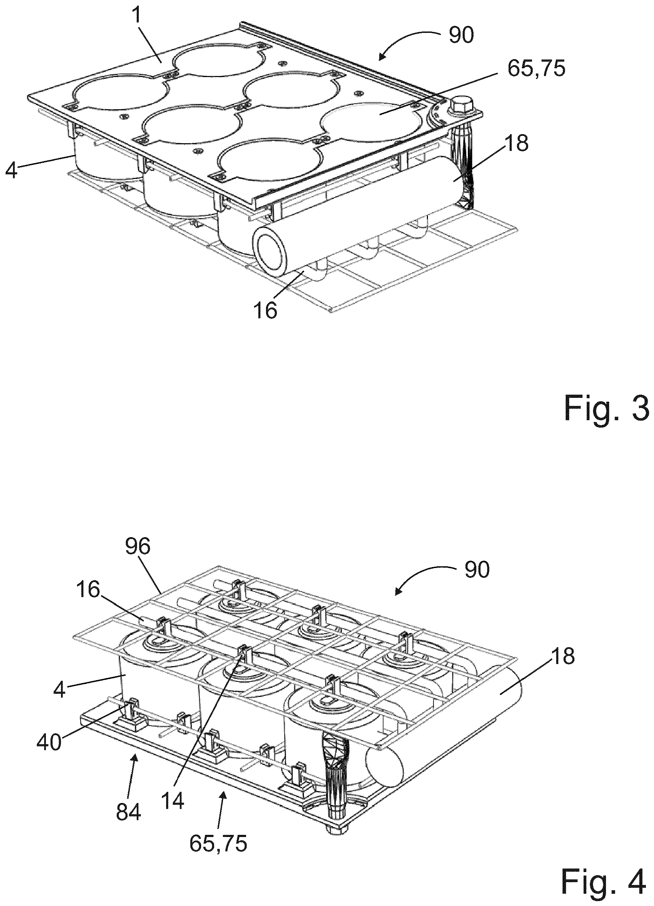

Fig. 1 zeigt eine schematische Darstellung einer Ausführungsform eines Bauelements 90 vor dem Vergießen mit Beton 92 in perspektivischer Ansicht von oben, Fig. 2 zeigt dieses von unten. Für den Beton 92 ist der Bereich angegeben, in dem nach dem Betonieren die Matrix ausgebildet ist. Im Interesse einer besseren Sichtbarkeit der in das Bauelement 90 eingesetzten Elemente ist der Beton 92 selbst nicht dargestellt. Dies betrifft gleichermaßen die Figuren 3 und 4.

Von der Aufnahmestruktur 1 ragen die Aufnahmeelemente 4 nach unten (Fig. 1) bzw. oben (Fig. 2) ab, jeweils von der Oberseite 94 weg. Die Bewehrung 96 ist sowohl unterhalb der Oberseite 94 der Aufnahmestruktur 1 als auch unterhalb der Aufnahmeelemente 4 angeordnet. Die Bewehrung 96 wird jeweils in ihrer Lage gesichert durch Lagesicherungselemente 40. Die Maschenweite der Bewehrung 96 ist abgestimmt auf die Abstände A der Aufnahmeelemente 4. Dadurch können alle Bereiche, in denen der Beton 92 in voller Höhe ausgebildet ist und nicht von den Aufnahmeelementen 4 verdrängt wird, bewehrt ausgeführt werden. Zudem ist auf diese Weise eine optimale Lagesicherung der Bewehrung 96 möglich.

Die Aufnahmeelemente 4 weisen im Bereich der der Oberseite 94 jeweils eine Öffnung 10 auf, durch die der dazugehörige Funktionsbaustein 60 in den jeweiligen Aufnahmeraum 6 eingeführt werden kann. Hierzu bleibt die Öffnung 10 auch im fertig betonierten Bauteil 90 von der Oberseite 94 her zugänglich. Der Funktionsbaustein 60 wird durch eine Bausteinsicherung 12 in seiner Lage im Aufnahmeraum 6 gesichert. Der Funktionsbaustein 60 dient zur elektrischen Energiespeicherung, wobei die Elektroenergie über eine Leitung 16, die zugleich als Bewehrung 96 dient, zugeführt wird. Die elektrische Verbindung zwischen der Leitung 16, dem Aufnahmeelement 4 und dem Funktionsbaustein 60 wird durch eine Kontaktierung 14 gewährleistet.

Ein Montageteil 30, hier ausgeführt als Gewindehülse, ist ebenfalls mit der Aufnahmestruktur 1 verbunden. Dieses ist nach dem Einbetonieren im Beton 92 fest verankert und bietet daher die Möglichkeit, das Bauelement 90 mit einer übergeordneten Struktur, beispielsweise beim Einsatz des Bauelements 90 als Fassaden-, Decken- oder Wandelement, mit der jeweiligen Trägerstruktur, zum Beispiel einem Stahl- oder Betongerüst, verbunden zu werden.

Fig. 3 zeigt eine schematische Darstellung einer weiteren Ausführungsform eines Bauelements 90 mit eingebetteten Leitungen 16 vor dem Vergießen mit Beton 92 in perspektivischer Ansicht von oben, Fig. 4 von unten. Im Unterschied zu dem Ausführungsbeispiel, das in den Figuren 1 und 2 gezeigt wird, sind hier Funktionselemente 65, 75, die der Speicherung und Gewinnung von thermischer Energie dienen, in die im Übrigen in gleicher Weise in das Bauteil 90 eingebaute Aufnahmestruktur 1 eingesetzt. Eine Einsatzmöglichkeit besteht beispielsweise als Vorhangfassade, wobei bei Sonneneinstrahlung die eingetragene thermische Energie zunächst von dem Funktionsbaustein 75 aufgenommen wird, der entweder mit dem Funktionsbaustein 65 kombiniert ist oder die aufgenommene Wärmeenergie an einen benachbarten Funktionsbaustein 65 abgibt.

Wird so gewonnene thermische Energie zur Verwendung, beispielsweise zur Warmwasserbereitung oder zur saisonalen Energiespeicherung, benötigt, wird sie von dem Funktionsbaustein 65 über die Kontaktierung 14 an die Leitung 16 abgegeben. Die Leitung 16 ist in diesem Fall zur Durchleitung eines Fluids, das als Wärmeträgermedium dient, ausgeführt. Über ein Sammelrohr 18 wird das aufgewärmte Wärmeträgerfluid aus dem Bauelement 90 abgeführt. Die thermischen Speicher können kontinuierlich Wärme an ihre Umgebung und somit auch an die Kapillarrohre abgeben. Die durch das Fluid oder die thermischen Elemente aufgenommene Wärmeenergie hält das Gebäude bei Wärmeeinstrahlung kühl. Weiterhin wird ein evtl. aufgebrachtes Photovoltaik-Modul gekühlt, wodurch dessen Wirkungsgrad erhöht wird. Die thermischen Speicher geben kontinuierlich Wärme ab, sofern die Außentemperatur unter die der thermischen Speicher gesunken ist, wodurch das Bauelement und das Gebäude langsamer auskühlen.

Weiterhin kann ein Bauelement 90 bzw. eine übergeordnete Aufnahmestruktur über Funktionselemente 65, 75 an ein Kapillarrohrsystem angeschlossen werden. Durch dieses Kapillarrohrsystem fließt eine Flüssigkeit. Diese transportiert als Wärmeträgermedium Wärme in das Bauelement 90 hinein oder aus dem Bauelement 90 heraus. Somit kann thermische Energie gezielt aus oder in das Bauelement 90 geleitet werden. Das Sammelrohr 18 des Kapillarsystems endet in einem Funktionsbaustein 84, welcher den Durchfluss regelt. Der Funktionsbaustein 84 enthält einen Durchflussregler und/oder eine Pumpe.

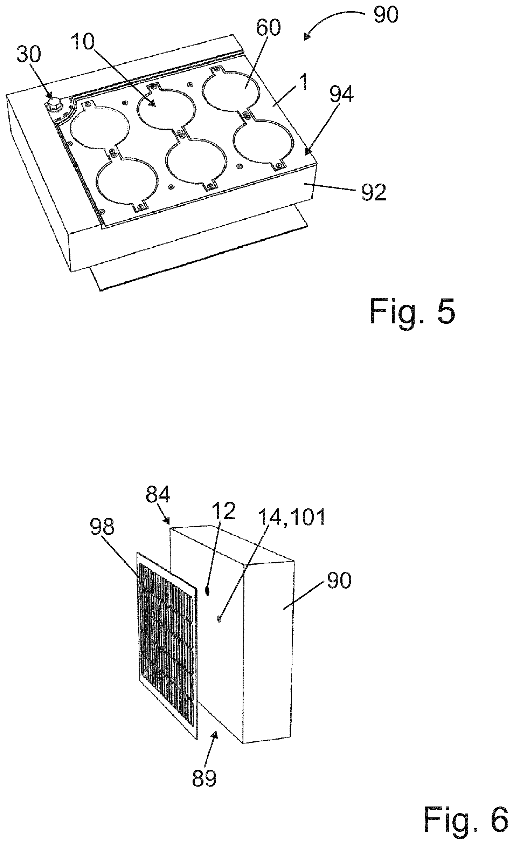

Fig. 5 zeigt eine schematische perspektivischer Darstellung einer Ausführungsform eines Bauelements 90, umfassend die Funktionsbausteine 70 hier bereits vergossen mit Beton 92. auf der Oberseite 94 sind die hier verschlossenen Öffnungen 10 in der Aufnahmestruktur 1 zu sehen, wobei der Verschluss entweder durch die Funktionsbausteine 70 oder durch eine zusätzliche Kapselung erfolgt. Erkennbar ist ebenfalls eine zum Montageteil 30 gehörende Schraube, mit deren Hilfe die Verbindung des Bauelements 90 mittels Transportankern oder Verbindungssystemen (beispielsweise Agraffensystemen) zur Verbindung des Bauelements 90 mit der übergeordneten Struktur vorgenommen werden kann.

Fig. 6 zeigt eine schematische perspektivischer Explosivdarstellung einer weiteren Ausführungsform eines Bauelements 90 mit aufgesetztem Photovoltaik-Modul 98. Dabei erfolgt die Gewinnung von Elektroenergie nicht in einem Funktionsbaustein selbst, sondern vor das Bauelement 90 ist ein Fotovoltaik-Modul 98 gesetzt. Das Fotovoltaik-Modul 98 ist über eine Fixierverbindung 120 (beispielsweise ausgeführt als eine Gewindehülse oder ein Flachanker) und eine elektrische Kontaktierung 14, ausgeführt als Durchführung 101 zur Kontaktierung von externen Elementen, mit einem Funktionsbaustein 89, der als Kontaktbaustein ausgeführt ist, verbunden. Dadurch kann unter Verzicht auf eine zusätzliche, oberflächliche und damit störanfälliger Verkabelung die im Fotovoltaik-Modul 98 erzeugt Elektroenergie innerhalb des Bauelements 90 abgeführt werden. Zugleich wird ein erleichtertes Auswechseln des Fotovoltaik-Moduls bei Defekt ermöglicht. Weiterhin ist ein Funktionsbaustein 84 mit Regeleinrichtung vorgesehen, der die Elektroenergieerzeugung des Fotovoltaik-Moduls 98 überwacht, gegebenenfalls auch einen Wechselrichter umfasst und bei einem Leistungsabfall oder Defekt eine entsprechende Alarmmeldung ausgibt.

Die Bausteinsicherung 12 und die Durchführung 101 werden vor der Betonage mit der Aufnahmestruktur 1 verbunden, wodurch das Fotovoltaik-Modul 98 passgenau aufgesetzt werden kann. Sofern ein Kapillarsystem und/oder wenigstens ein Funktionsbaustein 65 zur Speicherung von thermischer Energie vorgesehen sind, wird das Fotovoltaik-Modul 98 gekühlt. Dadurch wird der Wirkungsgrad bei der elektrischen Energiegewinnung erhöht.

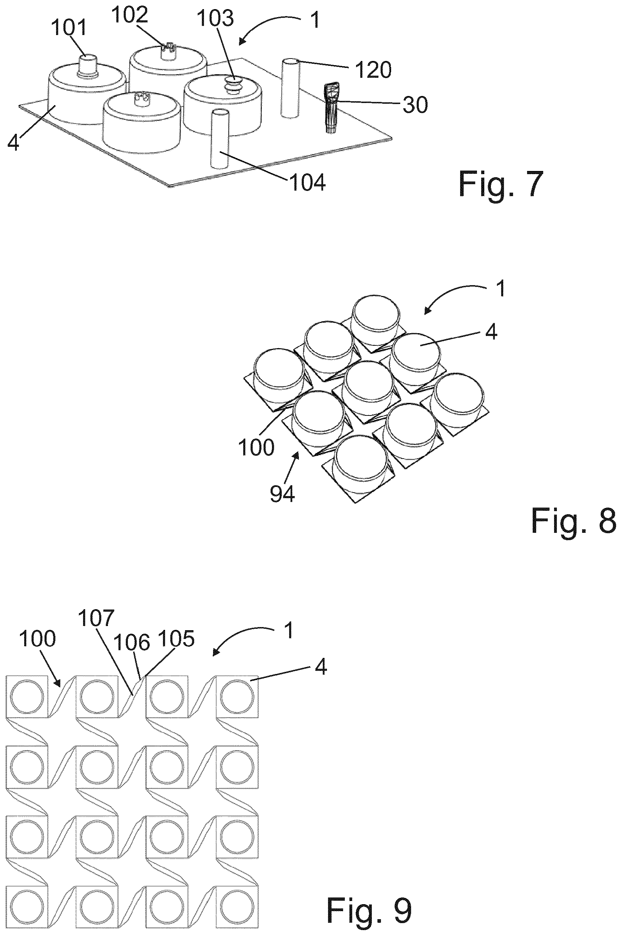

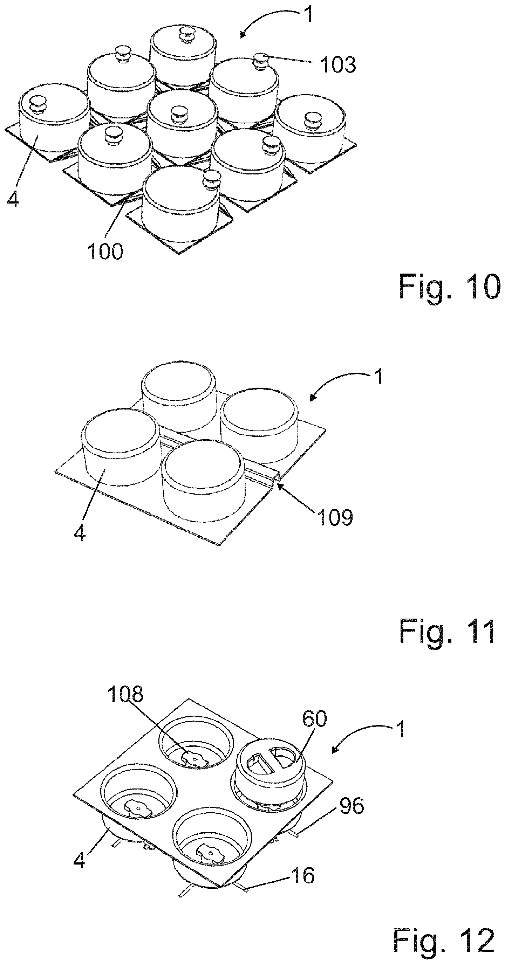

Fig. 7 zeigt schematische perspektivische Darstellungen von mit der Aufnahmestruktur beispielsweise durch Klicken, Kleben oder Schrauben verbundenen Ausführungsformen von Verbindungselementen. Die Durchführung 101 erzeugt eine Öffnung zwischen der Außenseite des Bauteils 90 und eines Funktionskörpers. Hier können beispielsweise Kabel zum Anschluss von dem Photovoltaik-Modul 98 durchgeführt werden. Das Einbauteil 102 ermöglicht eine Fixierung von Leitungen 16 mit dem Aufnahmeelement 4. Dies garantiert beispielswiese die Lagesicherung eines Kapillarrohrsystems. Ein Einbauteil zur Garnablage 103 ermöglicht eine von einem Raster unabhängige, insbesondere einem Lastverlauf entsprechende Garnablage und -sicherung gegenüber der Aufnahmestruktur 1. Anders als bei Fig. 2 muss daher kein vorgefertigtes, rechteckig gerastertes Bewehrungstextil eingesetzt werden. Das Garn der Bewehrung wird stattdessen um das Einbauteil 103 herumgeführt. Die Einbauteile 103 können dabei mit dem Aufnahmeelement 4 verschraubt, verklebt oder verschweißt werden und zuvor frei auf dem Aufnahmeelement positioniert werden. Siehe hierzu auch Fig. 10.

Weitere Verbindungselemente sind gezeigt, so das Montageteil 30 (vgl. Fig. 1) und die Fixierverbindung 120 (vgl. Fig. 6) und zudem eine Durchführung 101 zur Kontaktierung von externen Elementen (z. B. eines Photovoltaik-Moduls 98, vgl. Fig. 6) mit einem der Funktionsbausteine, ein Einbauteil 102 für Kapillarrohre und eine rohrförmige Durchführung 104 zur Durchführung von Kabeln.

Fig. 8 zeigt eine perspektivische Darstellung und Fig. 9 eine Draufsicht einer Ausführungsform einer flexiblen erfindungsgemäßen Aufnahmestruktur 1. Die Aufnahmeelemente 4 sind mittels Stegen 100 verbunden. Die Stege 100 umfassen eine Pivot-Verbindung 105, über die sie mit dem Aufnahmeelement 4 gelenkig verbunden sind. Diese Pivot-Verbindung 105 ist eine relativ zur Stegbreite dünne Verbindungsfläche zu den Aufnahmeelementen 4, beispielsweise ausgeführt als ein Filmscharnier. Weiterhin kann sich der Steg 100 an den dünnen Stellen, die als verformbarerer Stegabschnitt

106 ausgebildet sind, verformen. An den dicken Stellen, dem biegesteifen Stegabschnitt 107, verbleibt er weitestgehend unverformt.

Diese Art der Verbindung ermöglicht eine Verformung der Aufnahmestruktur 1, auch zu einer doppelt gekrümmten Fläche. Dabei verbleiben zugleich die Aufnahmeelemente 4 unverformt und richten sich normal bzw. tangential zur Oberseite 94 aus. Die Aufnahmeelemente können dadurch weiterhin Funktionsbausteine aufnehmen und mit Verbindungselementen 30, 101, 102, 103, 104 versehen werden.

Fig. 10 zeigt eine perspektivische Darstellung einer erfindungsgemäßen Ausführungsform einer Aufnahmestruktur mit Stegen 100 zwischen den Aufnahmeelementen 4 und Elementen 103 zur freien Garnablage. Dies ermöglicht die Herstellung von mehrfachgekrümmten Bauteilen 90 bei gleichzeitiger freier Bewehrungsführung.

Fig. 11 zeigt eine perspektivische Darstellung einer Aufnahmestruktur 1 mit einem integrierten Kabelkanal 109. Dieser kann beispielsweise im Tiefziehprozess bei der Herstellung der Aufnahmestruktur 1 in diese eingefügt werden. Der Kabelkanal 109 ermöglicht eine Kabel- bzw. Leitungsführung oberhalb der Aufnahmestruktur 1. Die so integrierten Kabel und Leitungen 16 verbinden die Funktionsbausteine untereinander. Dies stellt eine Alternative zur Verbindung über ein textiles Gelege bzw. in das Matrixmaterial eingebettete Leitungen 16 dar. Die in dem Kabelkanal 109 verlegten Kabel und Leitungen sind daher nach der Betonage noch zugänglich, was eine Erweiterung, ein Austausch oder eine Erneuerung der Kabel und Leitungen 16 auch nach der Fertigstellung noch ermöglicht.

Fig. 12 zeigt eine perspektivische Darstellung einer weiteren Ausführungsform einer Aufnahmestruktur 1. Mit dieser Ausgestaltung der Aufnahmeelemente 4 können die Funktionsbausteine, hier beispielhaft der Funktionsbaustein 60, mit dem Textil oder anderen Funktionsbausteinen, welche auf der Unterseite der Aufnahmestruktur 1 liegen, kontaktiert werden. Weiterhin werden die Funktionsbausteine, hier der Funktionsbaustein 60, dadurch mechanisch mit der Aufnahmestruktur 1 verbunden Die Funktionsbausteine, hier der Funktionsbaustein 60, sind so ausgeführt, dass sie in die Aufnahmeelement 4 eingedreht und mittels einer Verriegelung 108 verriegelt werden können. Dadurch entsteht eine mechanische Verbindung, die auch die Bewehrung 96 umfassen kann. Weiterhin ermöglicht die Verriegelung 108 nach einer vorteilhaften Weiterbildung eine elektrische Kontaktierung zu den auf der Unterseite der Aufnahmestruktur 1 befindlichen Leitungen 16, vorgesehen beispielsweise für textiles Heizen, für einen Funktionsbaustein mit Sensor 80 oder einen Funktionsbaustein 89 zur Aufnahme eines Photovoltaik-Moduls 98 (vgl. Fig. 6).

### Bezugszeichenliste

- 1: Aufnahmestruktur
- 4: Aufnahmeelement
- 6: Aufnahmeraum
- 8: Oberfläche
- 10: Öffnung
- 12: Bausteinsicherung
- 14: Kontaktierung
- 16: Leitung
- 18: Sammelrohr
- 30: Verbindungselement, Montageteil
- 40: Lagesicherungselement
- 60: Funktionsbaustein zur Speicherung von Elektroenergie
- 65: Funktionsbaustein zur Speicherung von thermischer Energie
- 70: Funktionsbaustein zur elektrischen Energiegewinnung
- 75: Funktionsbaustein zur thermischen Energiegewinnung
- 80: Funktionsbaustein mit Sensor
- 82: Funktionsbaustein zur bidirektionalen Übertragung
- 84: Funktionsbaustein mit Regeleinrichtung
- 86: Funktionsbaustein mit Einrichtungen zur Signalisierung
- 88: Funktionsbaustein als Anschlussbaustein
- 89: Funktionsbaustein als Kontaktbaustein
- 90: Bauelement
- 92: Beton
- 94: Oberseite
- 96: Bewehrung
- 98: Zusatzeinrichtung, Photovoltaik-Modul
- 100: Steg
- 101: Verbindungselement, Durchführung zur Kontaktierung von externen Elementen
- 102: Verbindungselement, Einbauteil für Kapillarrohre
- 103: Verbindungselement, Einbauteil für freie Garnablage
- 104: Verbindungselement, Durchführung
- 105: Pivot-Verbindung
- 106: verformbarer Stegabschnitt
- 107: biegesteifer Stegabschnitt
- 108: Verriegelung
- 109: Kabelkanal
- 120: Fixierverbindung
- A: Abstand
- M: Maschenweite

## Patentansprüche

1. Aufnahmestruktur (1), die zum Einguss in ein Matrixmaterial, insbesondere Beton (92), eines Bauelements (90) vorgesehen ist und zumindest zwei Aufnahmeelemente (4) aufweist, die aus der Aufnahmestruktur (1) in der Weise auskragen, dass sie in das Matrixmaterial wenigstens teilweise hineinragen, wobei die wenigstens zwei Aufnahmeelemente (4) jeweils einen Aufnahmeraum (6) aufweisen, der zur Oberfläche (94) des Bauelements (90) hin eine Öffnung (10) aufweist, welche von außerhalb zugänglich ist und durch die wenigstens ein Funktionsbaustein (60, 65, 70, 75, 80, 82, 84, 86, 88, 89) zum Einsetzen in den Aufnahmeraum (6) eingeführt ist, wobei zumindest ein Lagesicherungselement (40) zur Lagesicherung einer textilen Bewehrung (96) gegenüber der Aufnahmestruktur (1) vorgesehen ist, und wobei die Aufnahmestruktur (1) ausgeführt ist, im Wesentlichen die äußere Form mindestens einer Oberfläche des Bauelements (90) vorzugeben, **dadurch gekennzeichnet, dass** die mindestens zwei Aufnahmeelemente (4) durch mindestens einen Steg (100) gelenkig mittels einer Pivot-Verbindung (105) miteinander verbunden sind, und dass der mindestens eine Steg (100) dünne Stellen, die als verformbare Stegabschnitte (106) ausgebildet sind, und eine dicke Stelle, die als biegesteifer Stegabschnitt (107) ausgebildet ist, aufweisen, sodass die Aufnahmestruktur (1) mehrfach gekrümmt werden kann und die Aufnahmeelemente (4) eine im Wesentlichen tangentiale Lage zu einer gekrümmten Fläche einnehmen, selbst jedoch keine Verformung erfahren.

2. Aufnahmestruktur nach Anspruch 1, wobei eine lösbare mechanische Verbindung (12) zwischen der Aufnahmestruktur (1) und dem wenigstens einen Funktionsbaustein (60, 65, 70, 75, 80, 82, 84, 86, 88, 89) sowie eine Kontaktierung des wenigstens einen Funktionsbausteins (70, 80, 90) mit wenigstens einer Leitung (16) vorgesehen sind.

3. Aufnahmestruktur nach Anspruch 1 oder 2, wobei die wenigstens eine Leitung (16) als universeller Kanal, als Leerrohr für die Aufnahme anderer Leitungen (16) und/oder als Bewehrung (96) ausgebildet ist.

4. Aufnahmestruktur nach einem der Ansprüche 1 bis 3, wobei wenigstens ein Montageteil (30) und/oder wenigstens ein Lagesicherungselement (40) vorgesehen sind, wobei das wenigstens eine mit der Aufnahmestruktur (1) verbundene Montageteil (30) in das Matrixmaterial eingebettet eine Montage des Bauelements (1) an eine übergeordnete Struktur und einen Transport ermöglicht, wobei das wenigstens eine mit der Aufnahmestruktur (1) verbundene Lagesicherungselement (40) eine Lagesicherung und Führung der textilen Bewehrung (96) und/oder der wenigstens einen Leitung (16) ermöglicht.

5. Aufnahmestruktur nach einem der vorherigen Ansprüche, wobei der wenigstens eine Funktionsbaustein (65) als Speicher für Elektroenergie oder thermische Energie ausgeführt ist; oder wobei der wenigstens eine Funktionsbaustein (70) zur elektrischen Energiegewinnung oder wobei der wenigstens eine Funktionsbaustein (75) zur thermischen Energiegewinnung ausgeführt ist; oder wobei der wenigstens eine Funktionsbaustein (80) wenigstens einen Sensor zur Erfassung von Temperatur, Feuchtigkeit oder anderen physikalische Größen und/oder der wenigstens eine Funktionsbaustein (82) zur bidirektionalen Übertragung von Informationen zwischen bauelementinternen und bauelementexternen Sendern und Empfängern umfasst; oder wobei der wenigstens eine Funktionsbaustein (84) eine Regeleinrichtung umfasst, die ausgeführt ist, um die von dem wenigstens einen Sensor erfassten Daten und/oder die empfangenen oder die zu sendenden Informationen zu verarbeiten und/oder die Funktion weiterer Funktionsbausteine (60, 65, 70, 75, 82, 86) zu steuern oder zu regeln; oder wobei der wenigstens eine Funktionsbaustein (86) Einrichtungen zur Signalisierung umfasst.

6. Aufnahmestruktur nach einem der vorherigen Ansprüche, wobei der wenigstens eine Funktionsbaustein (88) als Anschlussbaustein, einen externen Ausgang umfassend, ausgeführt ist, um Flüssigkeiten, Informationen oder Energie über den externen Ausgang nach außen zu führen.

7. Aufnahmestruktur nach einem der vorherigen Ansprüche, wobei der wenigstens eine Funktionsbaustein als Kontaktbaustein (89) ausgeführt ist und für eine einfache Kontaktierung einer Zusatzeinrichtung (98) ausgeführt ist, die nach dem Einguss in das Matrixmaterial mit dem Bauelement (90) verbunden werden soll.

8. Bauelement (90), umfassend eine textile Bewehrung (96), ein insbesondere mineralisches Matrixmaterial und Leitungen (16), insbesondere für die Durchleitung von Elektrizität oder einem Fluid, **dadurch gekennzeichnet, dass** eine Aufnahmeelemente (4) aufweisende Aufnahmestruktur (1) gemäß einem der Ansprüche 1 bis 7 in das Matrixmaterial eingebettet sowie über Lagesicherungselemente (40) an die textile Bewehrung (96) und/oder die Leitungen (16) angebunden ist, wobei die textile Bewehrung (96) lastabhängig bezüglich der Aufnahmeelemente (4) ausgerichtet ist und die Aufnahmeelemente (4) vorzugsweise in Bereichen untergeordneter strukturmechanischer Relevanz eingebracht werden, sodass ein Einfluss auf das Tragverhalten des erzeugten Bauelements (90) minimiert wird.

9. Bauelement nach Anspruch 8, wobei das Bauelement (90) die textile Bewehrung (96) aufweist, deren Garne ein rechteckiges Raster bilden und wobei der Abstand (A) der Mittelpunkte der Aufnahmeelemente (4) ein Vielfaches der Maschenweite (M) des Rasters beträgt.

10. Bauelement nach Anspruch 8 oder 9, das plattenförmig ausgeführt und für einen Einsatz als hinterlüftete Außenwandverkleidung, als Außenschale einer Vorhangfassade oder als Parkhausdecke vorgesehen ist.

11. Bauelement nach einem der Ansprüche 8 bis 10, wobei elektronische Bauelemente oder intelligente Werkstoffe, welche zur selbstständigen Reaktion auf sich verändernde Umgebungsbedingungen ausgebildet sind, und/oder wobei in das Bauelement (90) integrierte oder mit dem Bauelement (90) verbundene Funktionskomponenten der thermischen oder elektrischen Energiegewinnung, der thermischen oder elektrischen Energiespeicherung sowie dem Energiemanagement vorgesehen sind.

## Claims

1. A receiving structure (1) which is provided for casting into a matrix material, in particular concrete (92), of a building element (90) and has at least two receiving elements (4) which project out of the receiving structure (1) in such a way that they project at least partially into the matrix material, wherein the at least two receiving elements (4) each have a receiving space (6), which has an opening (10) towards the surface (94) of the building component (90), which opening is accessible from the outside and through which at least one functional component (60, 65, 70, 75, 80, 82, 84, 86, 88, 89) is introduced for insertion into the receiving space (6), at least one position-securing element (40) being provided for securing the position of a textile reinforcement (96) relative to the receiving structure (1), and wherein the receiving structure (1) is designed to essentially predetermine the outer shape of at least one surface of the structural element (90), **characterised in that** the at least two receiving elements (4) are connected to one another in an articulated manner by at least one web (100) by means of a pivot connection (105), and **in that** the at least one web (100) has thin sections, which are designed as deformable web sections (106), and a thick section, which is designed as a rigid web section (107), so that the receiving structure (1) can be curved several times and the receiving elements (4) assume a position essentially tangential to the curved surface, but do not themselves undergo any deformation.

2. The receiving structure according to claim 1, wherein a detachable mechanical connection (12) between the receiving structure (1) and the at least one functional module (60, 65, 70, 75, 80, 82, 84, 86, 88, 89) and a contacting of the at least one functional module (70, 80, 90) with at least one conduit (16) are provided.

3. The receiving structure according to claim 1 or 2, wherein the at least one conduit (16) is designed as a universal conduit, as an empty conduit for receiving other conduits (16) and/or as a reinforcement (96).

4. The receiving structure according to one of claims 1 to 3, wherein at least one mounting part (30) and/or at least one position-securing element (40) are provided, wherein the at least one mounting part (30) connected to the receiving structure (1), embedded in the matrix material, enables the component (1) to be mounted on a superordinate structure and transported, wherein the at least one position-securing element (40) connected to the receiving structure (1) enables the textile reinforcement (96) and/or the at least one conduit (16) to be secured in position and guided.

5. The receiving structure according to one of the preceding claims, wherein the at least one functional module (65) is designed as a storage device for electrical energy or thermal energy; or wherein the at least one functional module (70) is designed for electrical energy generation or wherein the at least one functional module (75) is designed for thermal energy generation; or wherein the at least one functional module (80) comprises at least one sensor for detecting temperature, humidity or other physical variables and/or the at least one functional module (82) for bidirectional transmission of information between transmitters and receivers internal and external to the component; or wherein the at least one function module (84) comprises a control device which is designed to process the data recorded by the at least one sensor and/or the information received or to be transmitted and/or to control or regulate the function of further function modules (60, 65, 70, 75, 82, 86); or wherein the at least one function module (86) comprises devices for signalling.

6. The receiving structure according to one of the preceding claims, wherein the at least one functional module (88) is designed as a connection module, comprising an external output, in order to conduct fluids, information or energy to the outside via the external output.

7. The receiving structure according to one of the preceding claims, wherein the at least one functional component is designed as a contact component (89) and is designed for simple contacting of an additional device (98) which is to be connected to the building element (90) after moulding into the matrix material.

8. A building element (90), comprising a textile reinforcement (96), a matrix material, in particular a mineral matrix material, and conduits (16), in particular for the transmission of electricity or a fluid, **characterised in that** the receiving element (4) having a receiving structure (1) according to one of claims 1 to 7 is embedded in the matrix material and connected to the receiving structure (1) via position-securing elements (40) and the textile reinforcement (96) and/or the conduits (16), wherein the textile reinforcement (96) is aligned in a load-dependent manner with respect to the receiving elements (4) and the receiving elements (4) are preferably introduced in areas of subordinate structural-mechanical relevance, so that an influence on the load-bearing behaviour of the generated structural element (90) is minimised.

9. The building element according to claim 8, wherein the building element (90) has the textile reinforcement (96), the parts of which form a rectangular grid and wherein the distance (A) between the centres of the receiving elements (4) is a multiple of the mesh width (M) of the grid.

10. The building element according to claim 8 or 9, which is designed in a panel form and is intended for use as rear-ventilated exterior wall cladding, as an outer shell of a fassade or as a car park ceiling.

11. The building element according to claim 8 to 11, wherein electronic components or intelligent materials, which are designed to react independently to changing environmental conditions, and/or wherein functional components for thermal or electrical energy generation, thermal or electrical energy storage and energy management are integrated in the component (90) or connected to the component (90).

## Revendications

1. Structure de réception (1), qui est prévue pour la coulée dans un matériau de matrice, notamment du béton (92), d'un élément de construction (90) et présente au moins deux éléments de réception (4) qui font saillie de la structure de réception (1) de telle sorte qu'ils s'étendent au moins partiellement dans le matériau de matrice, dans laquelle les au moins deux éléments de réception (4) présentent chacun un espace de réception (6) qui présente une ouverture (10) vers la surface (94) de l'élément de construction (90) qui est accessible de l'extérieur et à travers laquelle au moins un module fonctionnel (60, 65, 70, 75, 80, 82, 84, 86, 88, 89) est introduit pour l'insertion dans l'espace de réception (6), dans laquelle au moins un élément de sécurisation de position (40) est prévu pour la sécurisation en position d'une armature textile (96) par rapport à la structure de réception (1), et dans laquelle la structure de réception (1) est réalisée pour prédéfinir essentiellement la forme extérieure d'au moins une surface de l'élément de construction (90), **caractérisée en ce que** les deux au moins éléments de réception (4) sont connectés l'un à l'autre par au moins un étai (100) de manière articulée au moyen d'une connexion à pivot (105), et que l'au moins un étai (100) présente des endroits minces qui sont réalisés en tant que sections d'étai déformables (106) et un endroit épais qui est réalisé en tant que section d'étai résistante à la flexion (107) de sorte que la structure de réception (1) peut être courbée plusieurs fois et les éléments de réception (4) adoptent une position essentiellement tangentielle par rapport à une face incurvée mais ne subissent eux-mêmes pas de déformation.

2. Structure de réception selon la revendication 1, dans laquelle une connexion mécanique amovible (12) entre la structure de réception (1) et l'au moins un module fonctionnel (60, 65, 70, 75, 80, 82, 84, 86, 88, 89) ainsi qu'une mise en contact de l'au moins un module fonctionnel (70, 80, 90) avec au moins une conduite (16) sont prévues.

3. Structure de réception selon la revendication 1 ou 2, dans laquelle l'au moins une conduite (16) est réalisée en tant que canal universel, en tant que tuyau vide pour la réception d'autres conduites (16) et/ou en tant qu'armature (96).

4. Structure de réception selon une des revendications 1 à 3, dans laquelle au moins une pièce de montage (30) et/ou au moins un élément de sécurisation de position (40) sont prévus, dans laquelle l'au moins une pièce de montage (30) connectée à la structure de réception (1) permet de manière encastrée dans le matériau de matrice un montage de l'élément de construction (1) sur une structure supérieure et un transport, dans laquelle l'au moins un élément de sécurisation de position (40) connecté à la structure de réception (1) permet une sécurisation en position et un guidage de l'armature textile (96) et/ou de l'au moins une conduite (16).

5. Structure de réception selon une des revendications précédentes, dans laquelle l'au moins un module fonctionnel (65) est réalisé en tant que réservoir pour de l'énergie électrique ou énergie thermique ; ou dans laquelle l'au moins un module fonctionnel (70) est réalisé pour l'obtention d'énergie électrique ou dans laquelle l'au moins un module fonctionnel (75) est réalisé pour l'obtention d'énergie thermique ; ou dans laquelle l'au moins un module fonctionnel (80) comprend au moins un capteur pour la détection de température, d'humidité ou d'autres grandeurs physiques et/ou l'au moins un module fonctionnel (82) comprend pour la transmission bidirectionnelle d'informations entre émetteurs et récepteurs internes à l'élément de construction et externes à l'élément de construction ; ou dans laquelle l'au moins un module fonctionnel (84) comprend un dispositif de régulation qui est réalisé pour traiter les données détectées par l'au moins un capteur et/ou les informations reçues ou à envoyer et/ou pour commander ou pour réguler la fonction d'autres modules fonctionnels (60, 65, 70, 75, 82, 86) ; ou dans laquelle l'au moins un module fonctionnel (86) comprend des dispositifs de signalisation.

6. Structure de réception selon une des revendications précédentes, dans laquelle l'au moins un module fonctionnel (88) est réalisé en tant que module de raccordement comprenant une sortie externe pour guider des liquides, des informations ou de l'énergie par le biais de la sortie externe vers l'extérieur.

7. Structure de réception selon une des revendications précédentes, dans laquelle l'au moins un module fonctionnel est réalisé en tant que module de contact (89) et est réalisé pour une mise en contact simple d'un dispositif supplémentaire (98) qui doit être connecté à l'élément de construction (90) après la coulée dans le matériau de matrice.

8. Élément de construction (90), comprenant une armature textile (96), un matériau de matrice notamment minéral et des conduites (16), notamment pour le passage d'électricité ou d'un fluide, **caractérisé en ce qu'**une structure de réception (1) présentant des éléments de réception (4) selon une des revendications 1 à 7 est reliée à l'armature textile (96) et/ou aux conduites (16) de manière encastrée dans le matériau de matrice ainsi que par le biais d'éléments de sécurisation de position (40), dans lequel l'armature textile (96) est ajustée en fonction de la charge par rapport aux éléments de réception (4) et les éléments de réception (4) sont de préférence insérés dans des régions de pertinence inférieure en termes de mécanique structurelle de sorte qu'une influence sur le comportement sous différentes sollicitations de l'élément de construction généré (90) est minimisée.

9. Élément de construction selon la revendication 8, dans lequel l'élément de construction (90) présente l'armature textile (96) dont les fils forment une trame rectangulaire et dans lequel la distance (A) des points médians des éléments de réception (4) se monte à un multiple de l'ouverture de maille (M) de la trame.

10. Élément de construction selon la revendication 8 ou 9, qui est réalisé en tant que plaque et prévu pour une utilisation en tant que revêtement ventilé à la face arrière pour murs extérieurs, en tant que coque externe d'un mur-rideau ou en tant que couverture de parking couvert.

11. Élément de construction selon une des revendications 8 à 10, dans lequel des éléments de construction électroniques ou matériaux intelligents qui sont réalisés pour la réaction indépendante à des conditions environnementales variables, et/ou dans lequel des composants fonctionnels intégrés dans l'élément de construction (90) ou connectés à l'élément de construction (90) sont prévus pour l'obtention d'énergie thermique ou électrique, le stockage d'énergie thermique ou électrique ainsi que la gestion d'énergie.
